# EUROPÄISCHE PATENTSCHRIFT

(11) **EP 2 602 052 B1**
(45) Veröffentlichungstag und Bekanntmachung des Hinweises auf die Patenterteilung: **18.03.2015**
(21) Anmeldenummer: 12196385.4
(22) Anmeldetag: 10.12.2012
(51) Int. Cl.: B23Q 1/48

(54) **Werkzeugmaschine**
Machine tool
Machine-outil

(30) Priorität: 08.12.2011 DE 102011056195
(43) Veröffentlichungstag der Anmeldung: 12.06.2013
(73) Patentinhaber: Index-Werke GmbH & Co. KG Hahn & Tessky, 73730 Esslingen (DE)
(72) Erfinder: Baumann, Ulrich, 73525 Lenningen (DE); Stark, Ralf Thomas, 73110 Hattenhofen (DE); Schäfer, Martin Jörg, 70329 Stuttgart (DE); Schleich, Günther, 73269 Hochdorf (DE)
(74) Vertreter: Hoeger, Stellrecht & Partner Patentanwälte

(56) Entgegenhaltungen:
- EP-A2- 0 331 003
- DE-A1- 3 806 769
- DE-A1-102005 011 306
- DE-A1-102006 026 185
- DE-U1- 8 915 600

## Beschreibung

Die Erfindung betrifft eine Werkzeugmaschine umfassend, ein Maschinengestell, eine an dem Maschinengestell angeordnete Werkstückspindeleinheit mit einer Werkstückspindel und mit einer Werkstückaufnahme, welche durch einen Werkstückspindelantrieb um eine Werkstückspindelachse rotierend antreibbar und um die Werkstückspindelachse als C-Achse gesteuert drehbar ist, eine am Maschinengestell angeordnete Werkzeugträgereinheit mit einem Werkzeugrevolver, der einen relativ zum Revolvergehäuse um eine Revolverkopfachse drehbaren Revolverkopf umfasst und mit einer das Revolvergehäuse tragenden und am Maschinengestell abstützenden Werkzeugträgerbasis, mindestens ein Bewegungssystem, mit welchem die Werkstückaufnahme und ein in einer Arbeitsstellung stehendes Werkzeug relativ zueinander gesteuert bewegbar sind, und eine Maschinensteuerung zur Steuerung der Bewegungen des in der Arbeitsstellung stehenden Werkzeugs relativ zu einem in der Werkzeugaufnahme aufgenommenen Werkstück, wobei eine Interpolation einer lagegeregelten Bewegung in X-Richtung und Z-Richtung möglich ist.

Derartige Werkzeugmaschinen sind aus der DE 10 2006 026 185 A1 bekannt.

Bei diesen ist, insbesondere wenn eine Komplettbearbeitung des Werkstücks vorgesehen ist, eine Y-Achse vorzusehen, mit welcher die Möglichkeit besteht, angetriebene Werkzeuge quer zur X-Achse und quer zur Z-Achse zu bewegen.

Eine derartige Y-Achse erfordert jedoch einen großen Bauraum der Werkzeugmaschine quer zu einer durch die X-Richtung und die Z-Richtung definierten Bearbeitungsebene.

Der Erfindung liegt daher die Aufgabe zugrunde, eine Werkzeugmaschine der gattungsgemäßen Art dahingehend zu verbessern, dass diese möglichst kompakt aufgebaut ist.

Diese Aufgabe wird bei einer Werkzeugmaschine der eingangs beschriebenen Art erfindungsgemäß dadurch gelöst, dass das Revolvergehäuse und die Werkstückaufnahme relativ zueinander in Richtung einer zur Werkstückspindelachse parallelen Z-Achse und einer quer zur Z-Achse verlaufenden X-Achse bewegbar sind, dass das Revolvergehäuse mittels eines B-Bewegungssystems an der Werkzeugträgerbasis gehalten ist und mittels diesem relativ zu der Werkzeugträgerbasis um eine quer zur Z-Achse und quer zur X-Achse verlaufende B-Achse drehbar ist und dass die Maschinensteuerung durch Interpolation zwischen einer lagegeregelten Bewegung des Werkzeugs in der X-Richtung und/oder der Z-Richtung verbunden mit einem lagegeregelten Drehen des Revolverkopfes um die Revolverkopfachse eine Bewegung des in der Arbeitsstellung stehenden Werkzeugs in der Y-Richtung erzeugt.

Der Vorteil der erfindungsgemäßen Lösung ist somit darin zu sehen, dass eine Bewegbarkeit des Werkzeugs in der Y-Richtung durch eine virtuelle Y-Achse möglich ist, ohne dass eine den Bauraum der Werkzeugmaschine vergrößernde reale Y-Achse vorgesehen werden muss.

Prinzipiell wäre es im Rahmen der erfindungsgemäßen Lösung denkbar, dass eine Werkzeugachse des in der Arbeitsstellung stehenden Werkzeuges schräg oder senkrecht zur Revolverkopfachse verläuft.

Hinsichtlich der Erzeugung einer Bewegung des Werkzeugs in Y-Richtung für eine Bearbeitung des Werkstücks ist es jedoch besonders vorteilhaft, wenn zur Erzeugung der Bewegung in der Y-Richtung die Revolverkopfachse parallel zu einer Werkzeugachse des in Arbeitsstellung stehenden Werkzeugs ausgerichtet ist, da in diesem Fall eine vorteilhafte geometrische Relation vorliegt, mit welcher sich die Bewegung in der Y-Richtung besonders einfach realisieren lässt, insbesondere um ebene oder auch gewölbte Flächen, die entweder parallel zur Z-Achse oder quer zur Z-Achse verlaufen, erzeugen zu können.

Besonders zweckmäßig ist es dabei, wenn das in der Arbeitsstellung stehende Werkzeug zur Bearbeitung mit einer Bewegung in der Y-Richtung ein rotierend angetriebenes Werkzeug ist.

Insbesondere sieht eine vorteilhafte Lösung vor, dass die Interpolation der Bewegung in der X-Richtung und die Drehung um die Revolverkopfachse eine Bewegung des in der Arbeitsstellung stehenden Werkzeugs in einer zur Z-Richtung parallelen Fläche erzeugt, wobei die zur Z-Richtung parallele Fläche sowohl eine ebene als auch eine gewölbte Fläche sein kann.

Alternativ oder ergänzend ist aber auch möglich, dass die Interpolation der Bewegung in der Z-Richtung und der Drehung um die Revolverkopfachse eine Bewegung in einer quer zur Z-Richtung verlaufenden Fläche erzeugt, wobei die Fläche insbesondere parallel zur X-Richtung verläuft und dabei eben oder gewölbt sein kann.

Aus Gründen der Einfachheit ist es bei einer derartigen Werkzeugmaschine nicht erforderlich, dass die C-Achse, um welche die Werkstückaufnahme drehbar ist, als nicht interpolationsfähige gesteuerte, insbesondere geregelte Achse ausgebildet ist.

Ferner ist bei einer derartigen Werkzeugmaschine alternativ oder ergänzend ebenfalls aus Gründen der Einfachheit nicht erforderlich, dass die B-Achse des B-Bewegungssystems als nicht interpolationsfähige gesteuerte, insbesondere geregelte Achse ausgebildet ist.

Hinsichtlich der Ausbildung der Aufnahmen für das angetriebene Werkzeug wurden bislang keine näheren Angaben gemacht.

Vorzugsweise ist am Revolverkopf mindestens eine Werkzeugspindeleinheit zur Aufnahme des angetriebenen Werkzeugs vorgesehen.

Eine besonders günstige Lösung sieht vor, dass die am Revolverkopf angeordnete Werkzeugspindeleinheit in den Revolverkopf integriert ist, das heißt nicht als lösbar auf den Revolverkopf aufgesetzte Werkzeugspindeleinheit ausgebildet ist, sondern einen Bestandteil des Revolverkopfes darstellt, insbesondere dadurch, dass ein Werkzeugspindelgehäuse Teil des Revolverkopfes ist.

Insbesondere ist dabei vorgesehen, dass die am Revolverkopf angeordnete Werkzeugspindeleinheit ein am Revolverkopf sitzendes Werkzeugspindelgehäuse, eine Werkzeugspindel und einen Werkzeugspindelantrieb aufweist.

Der Werkzeugspindelantrieb kann dabei in unterschiedlichster Art und Weise ausgebildet sein.

Eine vorteilhafte Möglichkeit sieht vor, dass der Werkzeugspindelantrieb als Spindelmotor ausgebildet ist, das heißt, dass ein Rotor des Werkzeugspindelantriebs unmittelbar auf der Werkzeugspindel sitzt, während ein Stator in dem Werkzeugspindelgehäuse sitzt.

Eine andere vorteilhafte Möglichkeit sieht vor, dass der Werkzeugspindelantrieb einen durch eine Revolverkopfbewegungseinheit hindurchgeführten Antriebsstrang und einen mit dem Antriebsstrang gekoppelten, im Revolvergehäuse angeordneten Werkzeugspindelantriebsmotor aufweist.

Dabei ist zweckmäßigerweise der Antriebsstrang mit der Werkzeugspindel durch ein im Revolverkopf angeordnetes Kopplungsgetriebe gekoppelt.

Das Kopplungsgetriebe kann dabei ein einfaches Kopplungsgetriebe sein, welches mit einem konstanten Übersetzungsverhältnis arbeitet.

Alternativ dazu ist vorzugsweise vorgesehen, dass das Kopplungsgetriebe ein Wechselgetriebe ist, so dass die Übersetzung zwischen dem Antriebsstrang und der Werkstückspindel unterschiedlich gewählt werden kann.

Hinsichtlich der Ausrichtung einer Werkstückspindelachse der Werkstückspindel relativ zur Revolverkopfachse wurden bislang keine näheren Angaben gemacht.

So sieht eine vorteilhafte Lösung vor, dass die Werkzeugspindelachse der Werkzeugspindel parallel zur Revolverkopfachse ausgerichtet ist.

Bei einer möglichen Ausbildung des Revolverkopfes wäre es denkbar, die Werkzeugspindeleinheit derart klein auszubilden, dass sie in eine der vorgesehenen Werkzeugaufnahmen in dem Revolverkopf integriert ist.

Eine besonders günstige Lösung, insbesondere zur Ausbildung einer leistungsfähigen Werkzeugspindeleinheit sieht vor, dass die Werkzeugspindeleinheit in einem von Werkzeugaufnahmen freien Kreissegment des Revolverkopfes angeordnet ist.

Das heißt, dass der Revolverkopf so ausgebildet ist, dass er ein Kreissegment aufweist, in welchem weder erste noch zweite Werkzeugaufnahmen vorgesehen sind und dass in diesem Kreissegment dann die Werkzeugspindeleinheit angeordnet ist.

Dies ermöglicht es, insbesondere bei einer leistungsfähigen Werkzeugspindeleinheit den für diese erforderlichen Bauraum zu schaffen.

Ferner hat diese Lösung noch den Vorteil, dass dadurch die Werkzeuge in den ersten und zweiten Werkzeugaufnahmen nicht stören, wenn das Segment des Revolverkopfes, in welchem die Werkzeugspindeleinheit angeordnet ist, sich in einem ausreichend großen Winkelbereich um die Revolverkopfachse erstreckt.

Hinsichtlich der Ausbildung des Werkzeugrevolvers und der Anordnung desselben wurden bislang keine näheren Angaben gemacht.

So sieht eine vorteilhafte Lösung vor, dass das Revolvergehäuse relativ zur Werkzeugträgerbasis durch ein B-Bewegungssystem um die B-Achse drehbar gehalten ist, so dass das Revolvergehäuse unmittelbar selbst um die B-Achse drehbar ist.

Beispielsweise ist dabei vorgesehen, dass das B-Bewegungssystem von der Werkzeugträgerbasis getragen ist.

Insbesondere ist erfindungsgemäß das B-Bewegungssystem durch die Maschinensteuerung ansteuerbar, insbesondere lagegeregelt ansteuerbar.

Hinsichtlich der Ausbildung des B-Bewegungssystems wurden dabei keine näheren Angaben gemacht.

So sieht eine bevorzugte Lösung vor, dass das B-Bewegungssystem eine Drehlagerung und einen B-Achsantrieb zum Drehen des Revolvergehäuses um die B-Achse aufweist.

Dabei ist zweckmäßigerweise die Drehlagerung so ausgebildet, dass sie das Revolvergehäuse drehbar lagert.

Ferner ist vorzugsweise der B-Achsantrieb so ausgebildet, dass er ein ins Langsame übersetzendes Getriebe aufweist, welches abtriebsseitig das Revolvergehäuse um die B-Achse drehend antreibt.

Prinzipiell könnte das B-Bewegungssystem so ausgebildet sein, dass die Drehlagerung in verschiedenen diskreten Drehstellungen festlegbar ist, beispielsweise mit einer Hirth-Verzahnung.

Eine besonders günstige Lösung sieht vor, dass das B-Bewegungssystem mit einer Bremseinheit zum drehfesten Festlegen der jeweiligen Drehstellung versehen ist.

Eine derartige Bremseinheit hat den Vorteil, dass diese nicht eine Drehung in diskrete Drehstellungen erfordert, sondern die Möglichkeit schafft, das B-Bewegungssystem in beliebigen Drehstellungen drehfest festzulegen.

Vorzugsweise ist dabei die Bremseinheit als Scheibenbremse ausgebildet, da diese bei einfachem Aufbau die Möglichkeit schafft, große Haltemomente zu erzeugen.

Eine aufgrund der Einfachheit und Betriebssicherheit vorteilhafte Lösung sieht vor, dass die Scheibenbremse einen feststehenden Bremsbacken und einen relativ zu dem feststehenden Bremsbacken zwischen einer Bremsstellung und einer Lösestellung hin und her bewegbaren Bremsbacken umfasst.

Insbesondere ist dabei vorgesehen, dass die Bremsscheibe zwischen dem feststehenden und den bewegbaren Bremsbacken eingreift und in der Lösestellung berührungsfrei zu dem feststehenden und dem bewegbaren Bremsbacken verläuft und zum Erreichen der Bremsstellung der bewegbare Bremsbacken eine Deformation der Bremsscheibe bis zu Anlage an dem feststehenden Bremsbacken erzeugt.

Hinsichtlich des Antriebs des Revolverkopfes wurden bislang keine näheren Angaben gemacht.

Prinzipiell wäre eine konventionelle Ausbildung des Antriebs des Revolverkopfes denkbar.

Insbesondere sieht eine vorteilhafte Ausführungsform jedoch vor, dass der Revolverkopf durch eine am Revolvergehäuse angeordnete Revolverkopfbewegungseinheit um die Revolverkopfachse drehbar ist.

Insbesondere ist dabei vorgesehen, dass die Revolverkopfbewegungseinheit eine Drehlagerung und einen Revolverkopfdrehantrieb aufweist.

Der Revolverkopfdrehantrieb könnte dabei ein konventioneller Revolverkopfdrehantrieb sein.

Insbesondere ist es günstig, wenn die Revolverkopfbewegungseinheit als Revolverkopfdrehantrieb einen Hochmomentdirektantriebsmotor, insbesondere einen Torque-Motor, umfasst, mit dessen Rotor der Revolverkopf verbunden ist und dessen Stator fest im Revolvergehäuse angeordnet ist.

Der Vorteil eines Hochmomentdirektantriebs-Motors ist der, dass mit diesem kein Untersetzungsgetriebe erforderlich ist, sondern der Revolverkopf unmittelbar mit dem Rotor des Hochmomentdirektantriebs-Motors gekoppelt sein kann, wobei der Hochmomentdirektantriebs-Motor die Möglichkeit schafft, ausreichend große Drehmomente zu erzeugen, um den Revolverkopf in seiner jeweiligen Stellung zu halten.

Insbesondere ist dabei vorgesehen, dass der Revolverkopfdrehantrieb durch die Maschinensteuerung lagegeregelt antreibbar ist.

Um zu erreichen, dass der Revolverkopfdrehantrieb dann entlastet wird, wenn der Revolverkopf feststehen kann, ist vorzugsweise vorgesehen, dass die Drehstellungen des Revolverkopfes durch eine Bremseinheit in jeder Drehstellung relativ zum Revolvergehäuse drehfest festlegbar sind.

Eine zweckmäßige Lösung sieht vor, dass die Bremseinheit als Scheibenbremse ausgebildet ist, welche mindestens einen zwischen einer Bremsstellung und einer Lösestellung bewegbaren Bremskörper umfasst.

Besonders günstig ist es, wenn die Bremseinheit eine in der Lösestellung berührungsfrei zwischen die Bremskörper eingreifende und in der Bremsstellung in Richtung des feststehenden Bremskörpers deformierbare Bremsscheibe aufweist.

Im Zusammenhang mit der bisherigen Erläuterung der erfindungsgemäßen Lösung wurden keine näheren Angaben dazu gemacht, wie die Relativbewegung der Werkstückaufnahme und des Werkzeugs in einer X-Richtung erfolgen soll.

Eine besonders günstige Lösung sieht vor, dass die Relativbewegung zwischen der Werkstückaufnahme und dem Werkzeug in Richtung einer X-Achse durch ein X-Bewegungssystem erzeugbar ist.

Insbesondere ist dabei das X-Bewegungssystem so ausgebildet, dass es einen längs X-Führungen bewegbaren X-Schlitten umfasst.

Vorzugsweise umfasst das X-Bewegungssystem außerdem einen X-Achsenantrieb.

Das X-Bewegungssystem könnte prinzipiell verschiedene Teile der Werkzeugmaschine relativ zueinander bewegen.

Eine besonders günstige Lösung sieht vor, dass das X-Bewegungssystem zwischen der Werkzeugträgerbasis und dem B-Bewegungssystem wirksam ist.

Dabei ist vorzugsweise das X-Bewegungssystem an der Werkzeugträgerbasis angeordnet und trägt das B-Bewegungssystem.

Darüber hinaus ist vorzugsweise vorgesehen, dass die Relativbewegung zwischen der Werkstückaufnahme und dem Werkzeug in Richtung einer Z-Achse durch ein Z-Bewegungssystem erzeugbar ist.

Zweckmäßigerweise umfasst dabei das Z-Bewegungssystem einen längs der Z-Führungen bewegbaren Z-Schlitten.

Ferner ist vorzugsweise vorgesehen, dass das Z-Bewegungssystem einen Z-Achsenantrieb aufweist.

Darüber hinaus ist zweckmäßigerweise das Z-Bewegungssystem zwischen dem Maschinengestell und der Werkzeugträgerbasis wirksam.

Insbesondere ist vorgesehen, dass das Z-Bewegungssystem die Werkzeugträgerbasis trägt.

Bei der bisherigen Beschreibung der Werkzeugmaschine wurde nicht näher auf die Ausbildung des Revolverkopfes eingegangen.

Eine besonders günstige Lösung sieht vor, dass der Werkzeugrevolver als Kronenrevolver mit einem Revolverkopf ausgebildet ist, dass am Revolverkopf mindestens eine Werkzeugspindeleinheit zur Aufnahme eines angetriebene Werkzeugs angeordnet ist, dass das Revolvergehäuse relativ zur Werkzeugträgerbasis um eine quer zur Z-Achse und quer zur X-Achse verlaufende B-Achse durch die Maschinensteuerung gesteuert drehbar ist und dass die Revolverkopfachse quer zur B-Achse verläuft.

Durch diese Konstruktion besteht einerseits die Möglichkeit, den Revolverkopf optimal relativ zum Werkstück auszurichten, um die am Revolverkopf vorgesehenen Werkzeuge optimal einsetzen können und andererseits besteht die Möglichkeit, durch die ebenfalls am Revolverkopf angeordnete Werkzeugspindeleinheit ein angetriebenes Werkzeug zur Verfügung zu stellen, das ebenfalls zusätzlich zu den übrigen am Revolverkopf angeordneten Werkzeugen zur Bearbeitung des Werkstücks einsetzbar ist.

Damit besteht die Möglichkeit, optimal zwischen konventionellen Drehbearbeitungen und Fräsbearbeitungen zu wechseln und auch insbesondere große Werkstücke zu bearbeiten.

Prinzipiell könnten am Revolverkopf Werkzeugaufnahmen in beliebiger Art und Weise angeordnet sein.

Eine besonders vorteilhafte Lösung sieht vor, dass der Revolverkopf einen Satz von ersten Werkzeugaufnahmen aufweist, die auf einer dem Revolvergehäuse abgewandten Seite des Revolverkopfes angeordnet sind.

Vorzugsweise ist dabei vorgesehen, dass die ersten Werkzeugaufnahmen quer zur Revolverkopfachse ausgerichtete Aufnahmeachsen aufweisen.

Dabei könnten die Winkel der Aufnahmeachsen zur Revolverkopfachse noch variieren.

Besonders günstig ist es jedoch, wenn die ersten Werkzeugaufnahmen mit ihren Aufnahmeachsen in demselben Winkel zur Revolverkopfachse verlaufen.

Besonders günstig hat sich eine Lösung erwiesen, bei welcher die Aufnahmeachsen der ersten Werkzeugaufnahmen mit der Revolverkopfachse einen Winkel im Bereich von 10° bis 40° einschließen, wobei es besonders günstig ist, wenn der Winkel zwischen 20° und 30° liegt.

Ferner ist vorzugsweise vorgesehen, dass der Revolverkopf einen Satz von zweiten Werkzeugaufnahmen aufweist, die auf einer dem Revolvergehäuse zugewandten Seite des Revolverkopfes angeordnet sind.

Mit derartigen zweiten Werkzeugaufnahmen besteht die Möglichkeit, die Zahl der am Revolverkopf anzuordnenden Werkzeuge zu vergrößern.

Besonders günstig ist es dabei, wenn die zweiten Werkzeugaufnahmen quer zur Revolverkopfachse ausgerichtete Aufnahmeachsen aufweisen.

Vorzugsweise sind dabei die zweiten Werkzeugaufnahmen mit ihren Aufnahmeachsen in demselben Winkel zur Revolverkopfachse angeordnet, das heißt, alle zweiten Werkzeugaufnahmen haben Aufnahmeachsen, die in demselben Winkel zur Revolverkopfachse verlaufen.

Die Winkel der Aufnahmeachsen für die zweiten Werkzeugaufnahmen wurden dabei nicht näher spezifiziert.

Vorzugsweise ist dabei vorgesehen, dass die Aufnahmeachsen der zweiten Werkzeugaufnahmen mit der Revolverkopfachse einen Winkel im Bereich von 100° bis 130°, vorzugsweise 110° bis 120°, einschließen.

Hinsichtlich der relativen Anordnung der ersten Werkzeugaufnahmen und der zweiten Werkzeugaufnahmen zueinander wurden bislang keine näheren Angaben gemacht.

So sieht eine bevorzugte Lösung vor, dass die Aufnahmeachsen von in einer Umlaufrichtung um die Revolverkopfachse aufeinanderfolgenden ersten und zweiten Werkzeugaufnahmen in in einem Winkelabstand voneinander verlaufenden Radialebenen durch die Revolverkopfachse liegen.

Das heißt, dass die Aufnahmeachsen zwar jeweils mit der Revolverkopfachse einen Winkel einschließen, dabei jedoch zusammen mit der Revolverkopfachse jeweils in einer Radialebene liegen, wobei vorzugsweise jede Aufnahmeachse in einer Radialebene liegt, die in einem Winkelabstand von der Radialebene der anderen Aufnahmeachse angeordnet sind.

Besonders zweckmäßig ist es, wenn die Radialebenen einen konstanten Winkelabstand voneinander aufweisen, das heißt, dass die Radialebenen eine Ebenenschar bilden, wobei die einzelnen Ebenen dieser Ebenenschar einen konstanten Winkelabstand voneinander aufweisen.

Die eingangs genannte Angabe wird außerdem durch ein Verfahren zum Betreiben einer Werkzeugmaschine umfassend, ein Maschinengestell, eine an dem Maschinengestell angeordnete Werkstückspindeleinheit mit einer Werkstückspindel und mit einer Werkstückaufnahme, welche durch einen Werkstückspindelantrieb um eine Werkstückspindelachse rotierend antreibbar und um die Werkstückspindelachse als C-Achse gesteuert drehbar ist, eine am Maschinengestell angeordnete Werkzeugträgereinheit mit einem Werkzeugrevolver, der einen relativ zum Revolvergehäuse um eine Revolverkopfachse drehbaren Revolverkopf umfasst, und mit einer das Revolvergehäuse tragenden und am Maschinengestell abstützenden Werkzeugträgerbasis mindestens ein Bewegungssystem, mittels welchem die Werkstückaufnahme und ein in einer Arbeitsstellung stehendes Werkzeug relativ zueinander gesteuert bewegbar sind, und eine Maschinensteuerung zur Steuerung der Bewegungen des in der Arbeitsstellung stehenden Werkzeugs relativ zu einem in der Werkstückaufnahme aufgenommenen Werkstück, erfindungsgemäß dadurch gelöst, dass das Revolvergehäuse und die Werkstückaufnahme relativ zueinander in Richtung einer zur Werkstückspindelachse parallelen Z-Achse und einer quer zur Z-Achse verlaufenden X-Achse bewegbar sind, dass das Revolvergehäuse mittels eines B-Bewegungssystems relativ zu der Werkzeugträgerbasis um eine quer zur Z-Achse und quer zur X-Achse verlaufende B-Achse drehbar ist und dass mit der Maschinensteuerung durch Interpolation zwischen einer gesteuerten Bewegung des in der Arbeitsstellung stehenden Werkzeugs in der X-Richtung und/oder der Z-Richtung verbunden mit einem gesteuerten Drehen des Revolverkopfes um die Revolverkopfachse eine Bewegung des Werkzeugs in der Y-Richtung erzeugt wird.

Dabei ist es besonders günstig, wenn bei der Erzeugung der Bewegung in der Y-Richtung die Revolverkopfachse parallel zu einer Werkzeugachse des in der Arbeitsstellung stehenden Werkzeugs ausgerichtet wird.

Vorzugsweise ist bei einer Ausführungsform vorgesehen, dass das in der Arbeitsstellung stehende Werkzeug rotierend angetrieben Werkzeug wird.

Eine Variante des Verfahrens sieht vor, dass die Interpolation der Bewegung in der X-Richtung und die Drehung um die Revolverkopfachse eine Bewegung des in der Arbeitsstellung stehenden Werkzeugs in einer zur Z-Richtung parallelen Fläche erzeugt wird.

Alternativ oder ergänzend sieht eine weitere Variante des Verfahrens vor, dass die Interpolation der Bewegung in der Z-Richtung und der Drehung um die Revolverkopfachse eine Bewegung des in der Arbeitsstellung stehenden Werkzeugs in einer quer zur Z-Richtung verlaufenden Fläche erzeugt wird.

Weitere vorteilhafte Verfahrensvarianten machen von im Zusammenhang mit der vorstehend beschriebenen Werkzeugmaschine erläuterten Verfahrensschritten Gebrauch.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Frontansicht eines Ausführungsbeispiels einer erfindungsgemäßen Werkzeugmaschine;
- Fig. 2: eine Draufsicht von oben auf die Werkzeugmaschine gemäß Fig. 1;
- Fig. 3: einen Schnitt längs Linie 3-3 in Fig. 1;
- Fig. 4: einen Schnitt längs Linie 4-4 in Fig. 1;
- Fig. 5: eine Darstellung ähnlich Fig. 4 einer Werkzeugträgerbasis mit einem X-Bewegungssystem und einem B-Bewegungssystem;
- Fig. 6: eine vergrößerte Darstellung des B-Bewegungssystems gemäß Fig. 5;
- Fig. 7: eine nochmals vergrößerte Darstellung eines Teils des B-Bewegungssystems im Bereich einer Bremseinheit;
- Fig. 8: einen schematischen Schnitt durch einen Werkzeugrevolver mit Darstellung eines Revolverkopfbewegungssystems und einer Werkzeugspindeleinheit;
- Fig. 9: eine ausschnittsweise vergrößerte Darstellung des Revolverkopfbewegungssystems im Bereich einer Bremseinheit;
- Fig. 10: eine vergrößerte Draufsicht auf den Werkzeugrevolver ähnlich Fig. 3;
- Fig. 11: einen Schnitt längs Linie 11-11 in Fig. 3;
- Fig. 12 bis 15: eine schematische Darstellung einer Bewegung eines Werkzeugs in Y-Richtung mit Interpolation einer Drehung um eine Revolverkopfachse und eine Bewegung in Richtung einer X-Achse und
- Fig. 16 bis 20: eine schematische Darstellung einer Bewegung eines Werkzeugs in Y-Richtung mit Interpolation einer Drehung um eine Revolverkopfachse und eine Bewegung in Richtung einer Z-Achse.

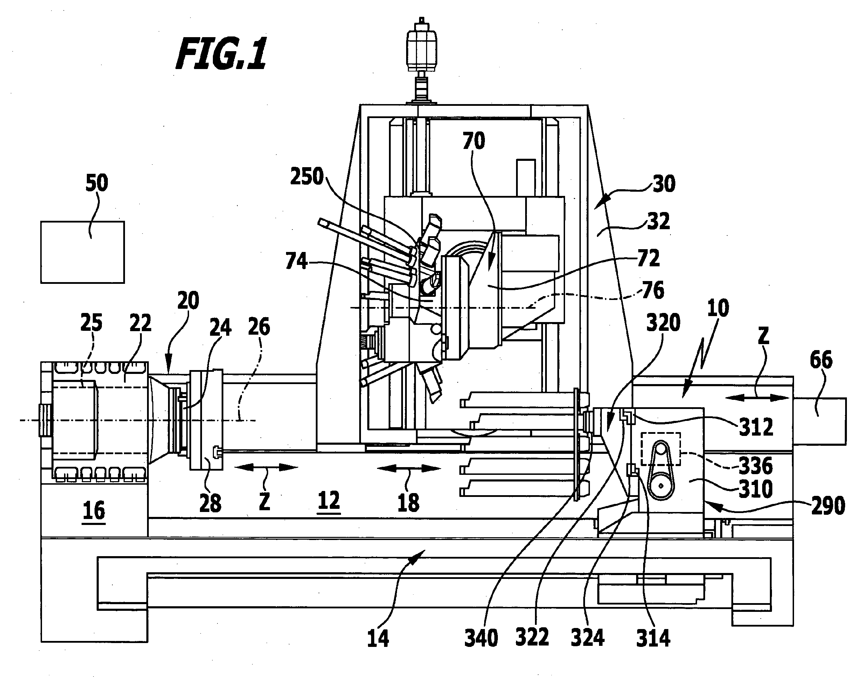

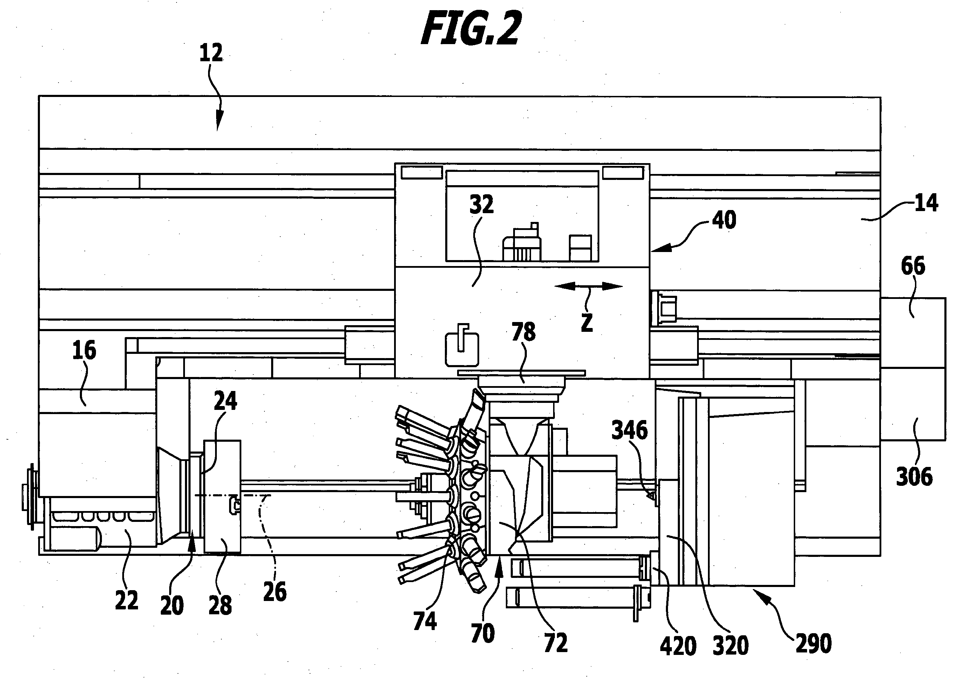

Ein Ausführungsbeispiel einer erfindungsgemäßen Werkzeugmaschine, dargestellt in Fig. 1 bis 4, umfasst ein als Ganzes mit 10 bezeichnetes Maschinengestell, welches einen Grundkörper 12 und einen Vorbau 14 aufweist, an welchem mittels eines Werkstückspindelträgers 16 eine als Ganzes mit 20 bezeichnete Werkstückspindeleinheit angeordnet ist, die ein Werkstückspindelgehäuse 22 aufweist, in welchem eine Werkstückspindel 24 um eine Werkstückspindelachse 26 drehbar gelagert und mittels eines Werkstückspindelantriebs 25 rotierend oder als E-Achse und gesteuert durch eine Maschinensteuerung 50 antreibbar ist, wobei die Werkstückspindel 24 eine Werkstückaufnahme 28 zur Fixierung von zu bearbeitenden Werkstücken trägt.

Die Werkstückspindelachse 26 erstreckt sich dabei vorzugsweise ungefähr parallel zu einer Längsrichtung 18 des Grundkörpers 12 des Maschinengestells 10.

An dem Grundkörper 12 des Maschinengestells 10 ist eine als Ganzes mit 30 bezeichnete Werkzeugträgereinheit vorgesehen, welche eine Werkzeugträgerbasis 32 umfasst, die mittels eines Z-Bewegungssystems 40 an dem Grundkörper 12 in einer zur Werkstückspindelachse 26 parallelen Z-Richtung geführt ist, wobei das Z-Bewegungssystem 40 ein Z-Schlittensystem 42 und einen Z-Achsantrieb 44 umfasst, der durch die Maschinensteuerung 50 ansteuerbar ist.

Das Z-Schlittensystem 42 weist Z-Führungen 52 und 54 auf, die am Grundkörper 12 angeordnet sind, und an welchen Z-Führungswagen 56 und 58 geführt sind, die ihrerseits an der Werkzeugträgerbasis 32 angeordnet sind und mit dieser einen Z-Schlitten 60 bilden.

Der Z-Achsantrieb 44 weist beispielsweise eine Antriebsspindel 62 auf, die drehbar, jedoch unverschieblich und sich in Z-Richtung erstreckend am Grundkörper 12 gelagert ist und mit einer mit der Werkzeugträgerbasis 32 verbundenen Spindelmutter 64 zusammenwirkt, wobei die Antriebsspindel 62 durch einen Z-Antriebsmotor 66 antreibbar ist.

Durch den Z-Achsantrieb 44 ist somit die Werkzeugträgerbasis 32 in der Z-Richtung relativ zum Grundkörper 12 gesteuert, insbesondere lagegeregelt, bewegbar und in Z-Richtung relativ zur Werkstückaufnahme 28 in beliebigen Positionen positionierbar.

Die Werkzeugträgerbasis 32 der Werkzeugträgereinheit 30 trägt ihrerseits noch einen als Ganzes mit 70 bezeichneten Werkzeugrevolver, welcher ein Revolvergehäuse 72 umfasst, an welchem ein Revolverkopf 74 um eine Revolverkopfachse 76 drehbar gelagert ist ( Fig. 1 bis 3 und 10).

Ohne eine gesteuerte Y-Achse liegt die Revolverkopfachse 76 stets in einer durch die Werkstückspindelachse 26 hindurchverlaufenden Bearbeitungsebene BE.

Ist bei einer zeichnerisch nicht dargestellten Variante eine durch die Maschinensteuerung 50 steuerbare Y-Achse vorhanden, so ist die Revolverkopfachse quer zur Bearbeitungsebene BE bewegbar.

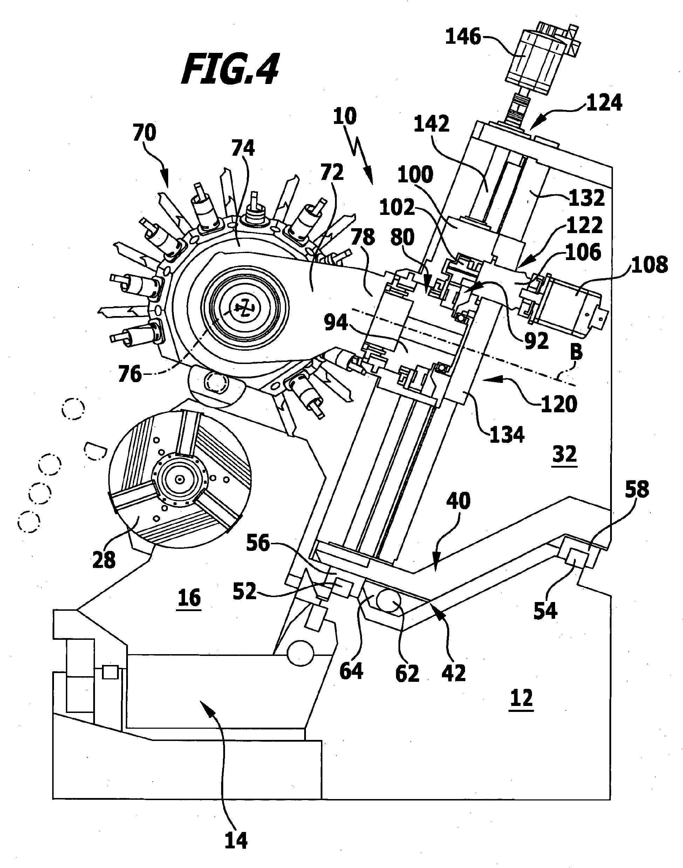

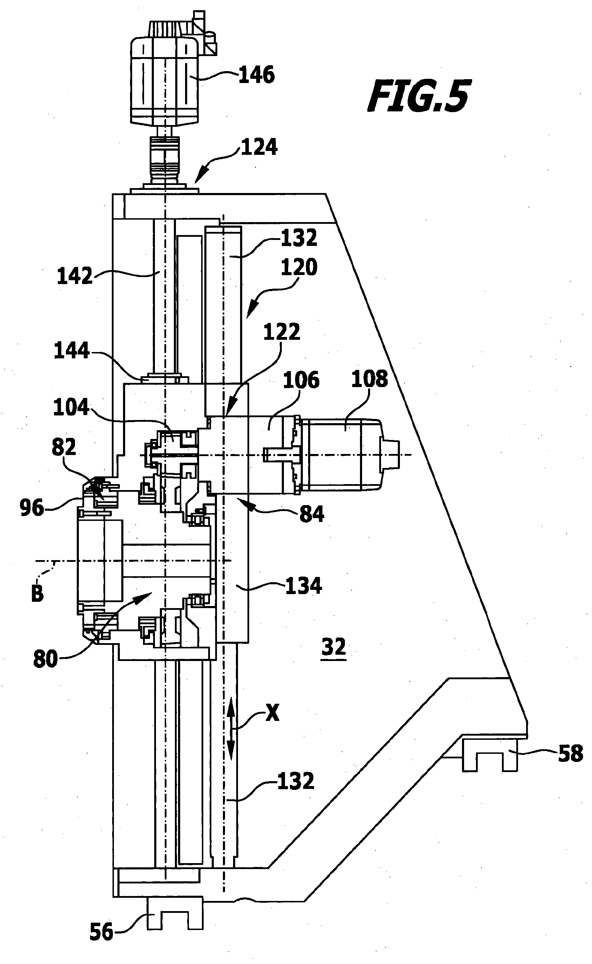

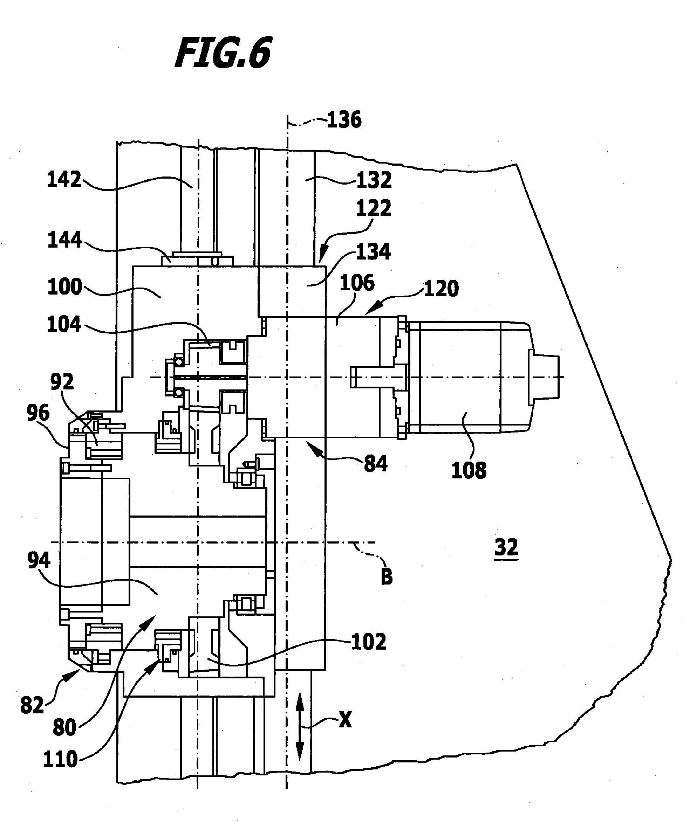

Das Revolvergehäuse 72 ist seinerseits an einem Fuß 78 mittels einem B-Bewegungssystems 80 (Fig. 4) um eine B-Achse B, die senkrecht zur Bearbeitungsebene BE ausgerichtet ist, drehbar, wobei das B-Bewegungssystem 80 eine Drehlagerung 82 für das Revolvergehäuse 72 sowie einen B-Achsantrieb 84 aufweist (Fig. 5 und Fig. 6).

Die Drehlagerung 82 wird durch ein Axial/Radiallager 92 gebildet, das einen Drehkörper 94 um die B-Achse drehbar lagert, wobei der Drehkörper 94 mit einer stirnseitigen Aufnahme 96 für den Fuß 78 des Revolverkopfgehäuses 72 versehen ist, so dass das Revolverkopfgehäuse 72 über das Axial/Radiallager 92 um die B-Achse B drehbar gelagert ist.

Das Axial/Radiallager 92 sitzt seinerseits in einem Basiskörper 100 des B-Bewegungssystems 80.

Der Drehachsantrieb 84 umfasst ein mit dem Drehkörper 94 drehfest verbundenes und vorzugsweise auf diesem sitzenden Antriebzahnrad 102, das durch ein Abtriebsritzel 104 eines ins Langsame übersetzenden Getriebes 106 antreibbar ist, welcher seinerseits durch einen B-Antriebsmotor 108 angetrieben und mit dem B-Antriebsmotor 108 an dem Basiskörper 100 gehalten ist, wobei der B-Antriebsmotor 108 durch die Maschinensteuerung 50 so ansteuerbar ist, dass der Drehachsantrieb 84 das Revolvergehäuse 72 lagegeregelt in jeder Drehlage halten kann.

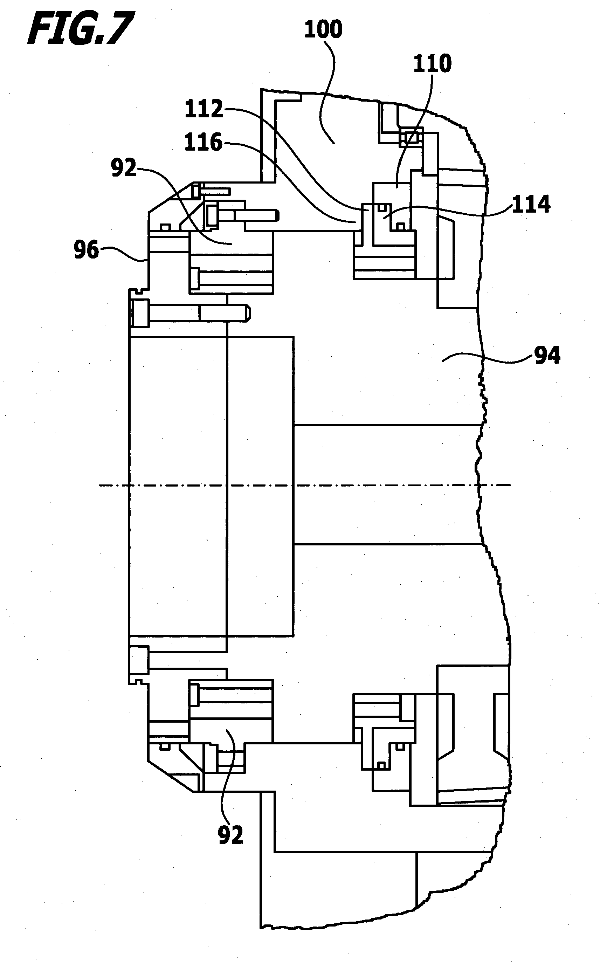

Um den Drehkörper 94 in den Drehlagen, in denen dieser lagegeregelt durch den B-Achsantrieb 84 gehalten wird, noch zusätzlich drehfest festlegen zu können, ist eine als Ganzes mit 110 bezeichnete Bremseinheit vorgesehen, die eine drehfest mit dem Drehkörper 94 verbundene Bremsscheibe 112 aufweist, die zwischen einem bewegbaren Bremsbacken 114 und einem feststehenden Bremsbacken 116 angeordnet ist und bei Bewegen des bewegbaren Bremsbackens 114 zwischen dem bewegbaren Bremsbacken 114 und dem feststehenden Bremsbacken 116 einspannbar ist (Fig. 7).

Der feststehende Bremsbacken 116 ist dabei Teil des Basiskörpers 100 und der bewegbare Bremsbacken 114 in Richtung des feststehenden Bremsbackens 116 bewegbar am Basiskörper 100 gelagert.

Damit besteht mit der erfindungsgemäßen Bremseinheit 110 die Möglichkeit, den Drehkörper 94 relativ zum Basiskörper 100 in jeder durch die Lageregelung des B-Achsantriebs 84 vorgegebenen Drehlage des Drehkörpers 94 den Drehkörper 94 über die Bremseinheit 110 relativ zum Basiskörper 100 mechanisch festzulegen.

Auch die Bremseinheit 110 ist durch die Maschinensteuerung 50 ansteuerbar.

Bei einer bevorzugten Ausführungsform ist die Bremseinheit 110 so ausgelegt, dass diese in der Lage ist, die Drehstellung des Werkzeugrevolvers 70 bei einer Bearbeitung eines Werkstücks auch bei den einwirkenden Bearbeitungskräften zu halten, so dass die Möglichkeit besteht, mittels der Maschinensteuerung 50 die Bremseinheit 110 zu aktivieren und die für die Aufrechterhaltung der Drehlage von der Lageregelung benötigte elektrische Leistung des B-Achsantriebs 84 zu reduzieren, und im Extremfall auf Null zu führen, da die Aufrechterhaltung der Drehlage durch die Bremseinheit 110 übernommen wird.

Bevor dann die Bremseinheit 110 wieder gelöst wird und die Lageregelung und Aufrechterhaltung der Drehlage wiederum durch den B-Achsantrieb 84 übernommen werden soll, wird die zur Lageregelung erforderliche elektrische Leistung des B-Achsantriebs wieder auf die erforderliche Leistung vor Einwirken der Bremseinheit 110 erhöht, so dass dann nach Lösen der Bremseinheit 110 der B-Achsantrieb wieder in der Lage ist, die Drehlage des Werkzeugrevolvers 70 aufrecht zu erhalten oder gegebenenfalls zu verändern.

Mit dem B-Bewegungssystem 80 kann die Revolverkopfachse 76 in der Bearbeitungsebene BE gedreht werden.

Das B-Bewegungssystem 80 ist über ein als Ganzes mit 120 bezeichnetes X-Bewegungssystem, welches ein X-Schlittensystem 122 und einen X-Achsantrieb 124 aufweist an der Trägerbasis 32 gehalten und relativ zu dieser in einer zur Bearbeitungsebene BE parallelen X-Richtung X bewegbar.

Bei dem dargestellten Ausführungsbeispiel trägt das X-Schlittensystem 122 den Basiskörper 100 und somit das B-Bewegungssystem 80 mit dem Werkzeugrevolver 70.

Das X-Schlittensystem 122 erlaubt eine Bewegung in der X-Richtung, die quer zur Z-Richtung verläuft, und umfasst an der Werkzeugträgerbasis 32 vorgesehene X- Führungen 132, an denen ein X-Schlitten 134 in Richtung der X-Achse und parallel zu einer Ebene 136 ausgerichtet bewegbar geführt ist, wobei die Ebene 136 wiederum parallel zur Werkstückspindelachse 26 und somit auch parallel zur Z-Richtung Z verläuft, und außerdem die B-Achse 72 senkrecht zur Ebene 136 ausgerichtet ist.

Zum Bewegen des X-Schlittens 134 in Richtung der X-Achse ist der X-Achsantrieb 124 vorgesehen, welcher eine Antriebsspindel 142 aufweist, die relativ zur Werkzeugträgerbasis 32 drehbar, jedoch in ihrer Längsrichtung unverschiebbar an dieser gelagert ist, und mit einer an dem X-Schlitten 92 angeordneten Spindelmutter 144 zusammenwirkt.

Dabei ist die Antriebsspindel 142 durch einen X-Antriebsmotor 146 antreibbar.

Durch das X-Bewegungssystem 120 ist das gesamte B-Achsensystem 70 in der X-Richtung X relativ zur Werkzeugträgerbasis 32 bewegbar.

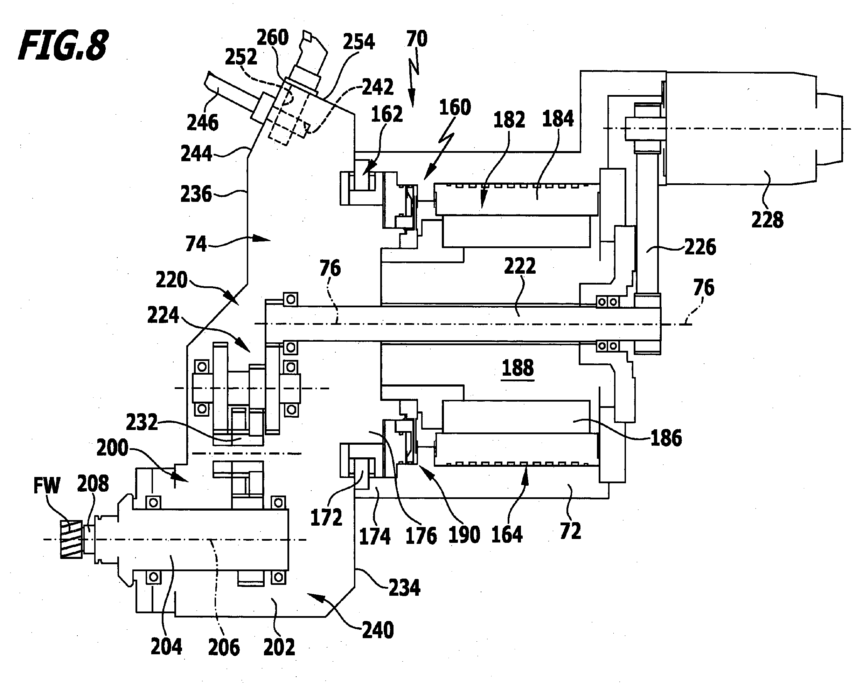

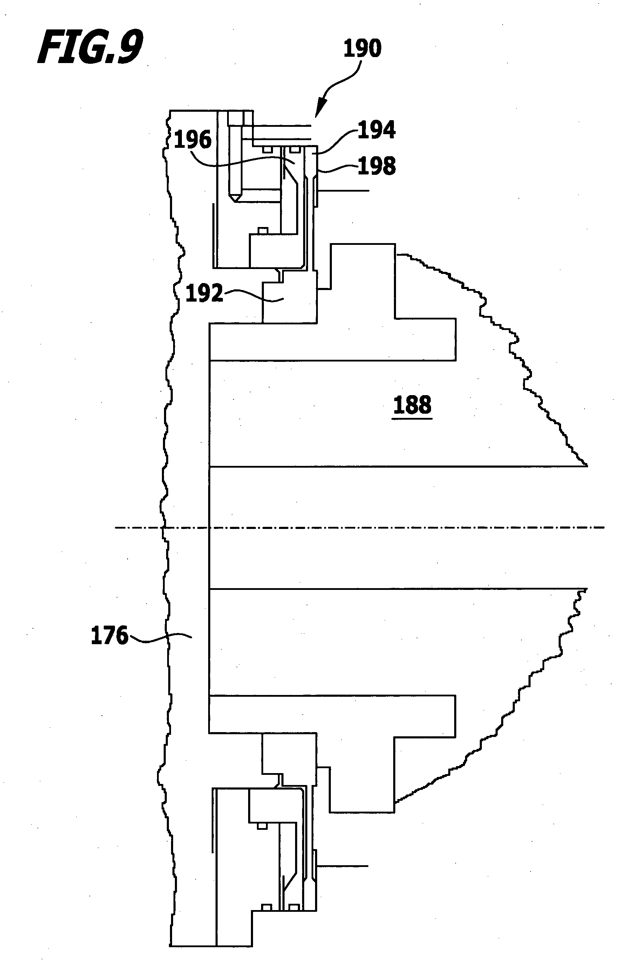

Bei der erfindungsgemäßen Werkzeugmaschine ist der Revolverkopf 74 relativ zum Revolvergehäuse 72 durch eine als Ganzes mit 160 bezeichnete Revolverkopfbewegungseinheit drehbar und drehfest festlegbar, wobei die Revolverkopfbewegungseinheit 160 eine Drehlagerung 162 sowie einen Revolverkopfdrehantrieb 164 aufweist (Fig. 8, Fig. 9).

Die Drehlagerung 162 wird dabei gebildet, durch ein Axial/Radiallager 172, welches an einem dem Revolverkopf 74 zugewandten Bereich des Revolvergehäuses 72 angeordnet ist und einen Lageransatz 176 des Revolverkopfes 74 aufnimmt, so dass durch dieses Axial/Radiallager 172 der gesamte Revolverkopf 74 an dem Revolvergehäuse 72 drehbar gelagert ist.

Ferner umfasst der Revolverkopfdrehantrieb 164 einen Torque-Motor 182, der einen stationär im Revolvergehäuse 72 angeordneten Stator 184 und einen Rotor 186 aufweist, der fest an einem mit dem Lageransatz 176 des Revolverkopfes 74 verbundenen Rotorträger 188 gehalten ist, so dass der Rotor 186 synchron mit dem Revolverkopf 74 drehbar ist.

Auch der Torque-Motor 182 ist so ausgebildet, dass mit der Maschinensteuerung 50 eine lagegeregelte Drehbarkeit des Revolverkopfes 74 um die Revolverkopfachse 76 möglich ist und dass außerdem sämtliche, auf den Revolverkopf 74 bei einer Bearbeitung eines Werkstücks wirkenden Momente von dem Torque-Motor 182 unter Beibehaltung der Lage aufgenommen werden können.

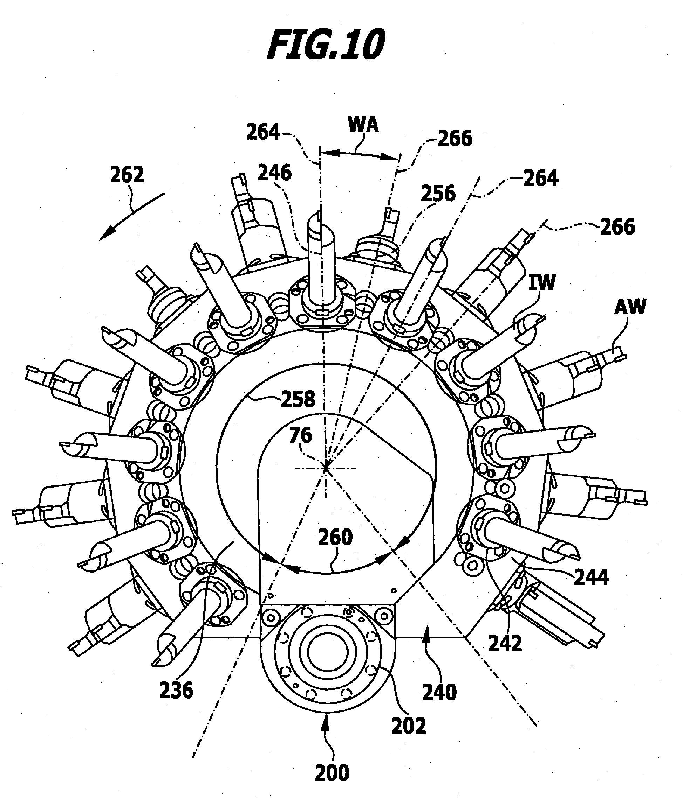

Ferner ist der Einheit aus dem Rotor 186 und dem Revolverkopf 74 eine in Fig. 9 und 10 dargestellte Bremseinheit 190 zugeordnet, welche einen fest mit dem Rotorträger 188 des Torque-Motors 182 verbundenen Stützring 192 aufweist, von welchem ausgehend sich radial nach außen eine Bremsscheibe 194 erstreckt (Fig. 9).

Die Bremsscheibe 194 ist zwischen einem bewegbaren Bremskörper 196 und einem feststehenden Bremskörper 198 angeordnet, wobei der bewegbare Bremskörper 196 und der feststehende Bremskörper 198 fest mit dem Revolvergehäuse 72 verbunden sind.

Die Bremsscheibe 194 ist dabei so angeordnet, dass sie bei nicht betätigtem bewegbarem Bremskörper 196 berührungsfrei zwischen diesem und dem feststehenden Bremskörper 198 drehbar ist, während die Bremsscheibe 194 bei kraftbeaufschlagtem bewegbaren Bremskörper 196 sich deformiert und dadurch an den feststehenden Bremskörper 198 anlegbar und zwischen diesem und dem bewegbaren Bremskörper 196 einspannbar ist, um den Rotor 186 des Torque-Motors 182 und mitsamt dem Revolverkopf 74 um die Revolverdrehachse 76 drehfest festlegen zu können.

Die Bremseinheit 190 ist dabei so dimensioniert, dass sie in der Lage ist, sämtliche bei der Bearbeitung eines Werkstücks auf den Revolverkopf 74 wirkenden Drehmomente aufzunehmen.

Ferner wird die Bremseinheit 190 so betrieben, dass diese aktiviert wird, wenn die jeweilige Drehlage des Revolverkopfes 44 durch den Revolverkopfdrehantrieb 164 stabil gehalten wird, so dass nach Aktivieren der Bremseinheit 190 die Möglichkeit besteht, die Leistung des Revolverkopfdrehantriebs 164 zur Positionierung des Revolverkopfes 74 zu reduzieren.

Vor einem Lösen der Bremseinheit wird jedoch die Leistung des Revolverkopfdrehantriebs 174 wieder soweit erhöht, dass sie wieder in der Lage ist, nach Lösen der Bremseinheit 190 die auf den Revolverkopf 74 wirkenden Drehmomente aufzunehmen und damit den Revolverkopf 74 drehlagestabil zu halten.

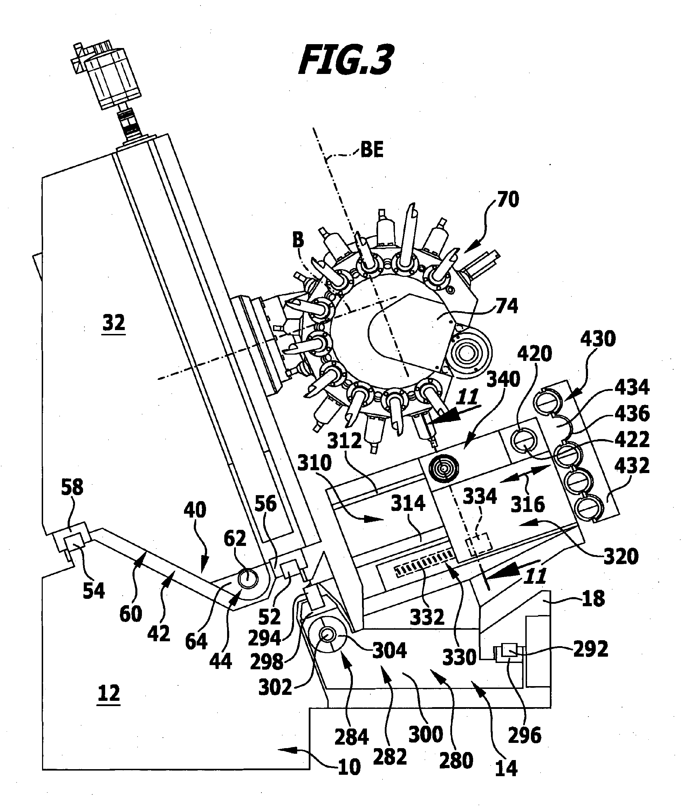

Wie in Fig. 3, 8 und 10 dargestellt, ist der Revolverkopf 74 mit einer Werkzeugspindeleinheit 200 versehen, welche ein Spindelgehäuse 202 aufweist, in welchem eine Werkzeugspindel 204 um eine Werkzeugspindelachse 206 drehbar gelagert ist, wobei die Werkzeugspindelachse 206 bei dem dargestellten Ausführungsbeispiel parallel zur Revolverkopfachse 76 ausgerichtet ist, jedoch im Abstand von dieser verläuft.

In die Werkzeugspindel 204 ist ein Schaft 208 eines rotierend antreibbaren Werkzeugs RW einsetzbar und durch die Werkzeugspindel 204 antreibbar.

Die Werkzeugspindel 204 könnte beispielsweise einen eigenen Werkzeugspindelmotor aufweisen.

Bei dem dargestellten Ausführungsbeispiel ist die Werkzeugspindel 204 durch einen als Ganzes mit 220 bezeichneten Werkzeugspindelantrieb antreibbar, welcher einen koaxial zur Revolverkopfachse 76 durch den Revolverkopfdrehantrieb 164 hindurchgeführten Antriebsstrang 222, beispielsweise in Form einer Antriebswelle aufweist, wobei der Antriebsstrang 222 einerseits über ein Kopplungsgetriebe 224 mit der Werkzeugspindel 204 gekoppelt ist und andererseits durch ein Kopplungsgetriebe 226 mit einem Werkzeugspindelantriebsmotor 228 gekoppelt ist, und wobei der Werkzeugspindelantriebsmotor 228 an dem Revolvergehäuse 72 angeordnet ist. Das Kopplungsgetriebe 226 und der Antriebsstrang 222 verlaufen in dem Revolvergehäuse 72 bis zum Revolverkopf 74, und im Revolverkopf 74 ist das Kopplungsgetriebe 224 angeordnet.

Dieses Kopplungsgetriebe 224 kann als ein einfaches, nur eine Übersetzung aufweisendes Kopplungsgetriebe ausgebildet sein.

Vorzugsweise ist das Kopplungsgetriebe 224 ein Schaltgetriebe, welches durch ein bewegbares Getriebezahnrad 232 in zwei verschiedene Übersetzungen umschaltbar ist.

Die Werkzeugspindeleinheit 200 ist so angeordnet, dass diese sich nicht über eine dem Revolvergehäuse 72 zugewandte Rückwand 234 des Revolverkopfes 74 hinauserstreckt, sondern über eine frontseitige Stirnwand 236 des Revolverkopfes 74 übersteht.

Ferner ist das Spindelgehäuse 202 der Werkstückspindeleinheit 200 in einen Trägerkörper 240 des Revolverkopfes 74, insbesondere einstückig, integriert, wobei der Trägerkörper 240 außer dem Spindelgehäuse 202 der Werkzeugspindeleinheit 200 noch mit einem Satz erster Werkzeugaufnahmen 242 versehen ist, die sich ausgehend von konisch zur Revolverkopfachse 76 verlaufenden Montageflächen 244 in den Trägerkörper 240 hineinerstrecken, wobei die Montageflächen 244 am Trägerkörper 240 auf einer dem Revolvergehäuse 72 abgewandten Frontseite angeordnet sind und beispielsweise der Revolverkopfachse 76 in einem Winkel von beispielsweise 115° verlaufen.

Die Werkzeugaufnahmen 242 sind dabei ihrerseits so angeordnet und ausgerichtet, dass eine Aufnahmeachse 246 derselben senkrecht zu den Montageflächen 244 verläuft und in diesem Fall zwischen sich und der Revolverkopfachse 76 einen Winkel von beispielsweise 25° einschließt.

Darüber hinaus ist der Trägerkörper 240 des Revolverkopfes 74 mit einem Satz von zweiten Werkzeugaufnahmen 252 versehen, welche sich ausgehend von Montageflächen 254 in den Trägerkörper 240 hineinerstrecken, wobei die Montageflächen 254 am Trägerkörper 240 auf einer dem Revolvergehäuse zugewandten Rückseite angeordnet sind und zu der Revolverkopfachse 76 in einem Winkel von beispielsweise 25° verlaufen, während die zweiten Werkzeugaufnahmen 252 Aufnahmeachsen 256 aufweisen, die einen Winkel von beispielsweise 115° mit der Revolverkopfachse 76 einschließen.

Bei dem in Fig. 10 dargestellten Revolverkopf 74 sind die Montageflächen 244 und 254 als konisch zur Revolverkopfachse 76 verlaufende und unter Bildung eines Außenrandes 250 des Revolverkopfes 74 aneinander angrenzende Außenflächen des Trägerkörpers 240 ausgebildet, die sich um die Revolverkopfachse 76 in einem Kreissegment 258 erstrecken, das sich über einen Winkelbereich von mindestens 270°, höchstens 320°, ausdehnt.

Somit ist der Revolverkopf 74 insbesondere als Kronenrevolverkopf ausgebildet.

Bei dem Revolverkopf 74 verbleibt am Trägerkörper 240 noch ein von den Werkzeugaufnahmen 242 und 252 und den Montageflächen 244 bzw. 254 freies Kreissegment 260, von mindestens 40°, höchstens 90°, in dem das Spindelgehäuse 202 an den Trägerkörper 240 angeordnet ist.

Zweckmäßigerweise sind bei dem Trägerkörper 240 die ersten Werkzeugaufnahmen 242 und die zweiten Werkzeugaufnahmen 252 in einer Umlaufrichtung 262 um die Revolverkopfachse 76 so angeordnet, dass die Aufnahmeachsen 246 und 256 jeweils in in der Umlaufrichtung 262 aufeinanderfolgenden Radialebenen 264 bzw. 266 liegen, die jedoch voneinander einen Winkelabstand WA aufweisen, wobei in jeder der Radialebenen 264 und 266 jeweils nur eine Werkzeugaufnahme 242 mit der Aufnahmeachse 246 bzw. 252 mit der Aufnahmeachse 256 angeordnet ist, so dass die ersten Werkzeugaufnahmen 242 und die zweiten Werkzeugaufnahmen 252 relativ zueinander in der Umlaufrichtung 262 versetzt angeordnet sind, um damit den Raum im Trägerkörper 240 optimal zu nutzen.

Vorzugsweise werden dabei in die ersten Werkzeugaufnahmen 242 überwiegend Innenbearbeitungswerkzeuge IW eingesetzt, während in den zweiten Werkzeugaufnahmen 252 vorwiegend Außenbearbeitungswerkzeuge AW eingesetzt werden können.

Damit besteht die Möglichkeit, in die Werkzeugaufnahmen 242 Innenbearbeitungswerkzeuge IW einzusetzen, während in die zweiten Werkzeugaufnahmen 252 vorwiegend Außenbearbeitungswerkzeuge AW eingesetzt werden, die in Richtung der Aufnahmeachsen 256 eine geringere Ausdehnung aufweisen als die Innenbearbeitungswerkzeuge IW in Richtung ihrer Aufnahmeachsen 246.

An dem Maschinengestell 12 ist außerdem der Werkstückspindeleinheit 20 gegenüberliegend ein Z-Trägersystem 280 vorgesehen, welches ein Z-Schlittensystem 282 sowie einen Z-Achsantrieb 284 zum Bewegen einer Funktionsträgerbasis 290 umfasst.

Das Z-Schlittensystem 282 weist am Maschinengestell 12 angeordnete Z-Führungen 292 und 294 auf, an denen Führungswagen 296 und 298 in Z-Richtung bewegbar geführt sind, wobei durch die Z-Führungswagen 296 und 298 ein als Ganzes mit 300 bezeichneter Z-Trägerschlitten an dem Vorbau 14 geführt ist.

Zum gesteuerten Verschieben des Z-Trägerschlittens 300 mittels der Maschinensteuerung 50 umfasst der Z-Achsantrieb 284 eine Antriebsspindel 302, welche mit einer Spindelmutter 304, die fest im Z-Trägerschlitten 300 angeordnet ist, zusammenwirkt und welche durch einen Antriebsmotor 306, ebenfalls angeordnet an dem Maschinengestell 10, antreibbar ist.

Der Z-Trägerschlitten 300 trägt, wie in Fig. 1 und 3 dargestellt, die Funktionsträgerbasis 290, welche eine Querführungsbasis 310 mit Querführungen 312 und 314 aufweist, wobei an diesen Querführungen 312 und 314 ein als Ganzes mit 320 bezeichneter Querschlitten der Funktionsträgerbasis 290 mittels mit den Querführungen 312 und 314 zusammenwirkenden Führungskörpern 322 und 324 geführt ist, so dass der Querschlitten 320 insgesamt über eine Führung relativ zur Querführungsbasis 310 in der Querrichtung 316 quer zur Z-Richtung bewegbar ist.

Der Querschlitten 320 ist durch einen als Ganzes mit 330 bezeichneten Querachsantrieb der Funktionsträgerbasis 290 in der Querrichtung 316 bewegbar, wobei der Querachsantrieb 330 eine Antriebsspindel 332 aufweist, welche mit einer Spindelmutter 334 zusammenwirkt, wobei die Spindelmutter 334 beispielsweise am Querschlitten 320 angeordnet ist und die Antriebsspindel 332, die sich in der Querrichtung 316 erstreckt, drehbar, jedoch in Richtung 316 unverschiebbar an der Querführungsbasis 310 angeordnet ist.

Die Antriebsspindel 332 ist dabei ferner noch durch einen als Ganzes mit 336 bezeichneten Antriebsmotor antreibbar, wobei der Antriebsmotor 336 durch die Maschinensteuerung 50 ansteuerbar, die es erlaubt, den Querschlitten 320 längs der Querrichtung 316 als positionsgesteuerte insbesondere lagegeregelt Achse ähnlich einer NC-Achse zu bewegen.

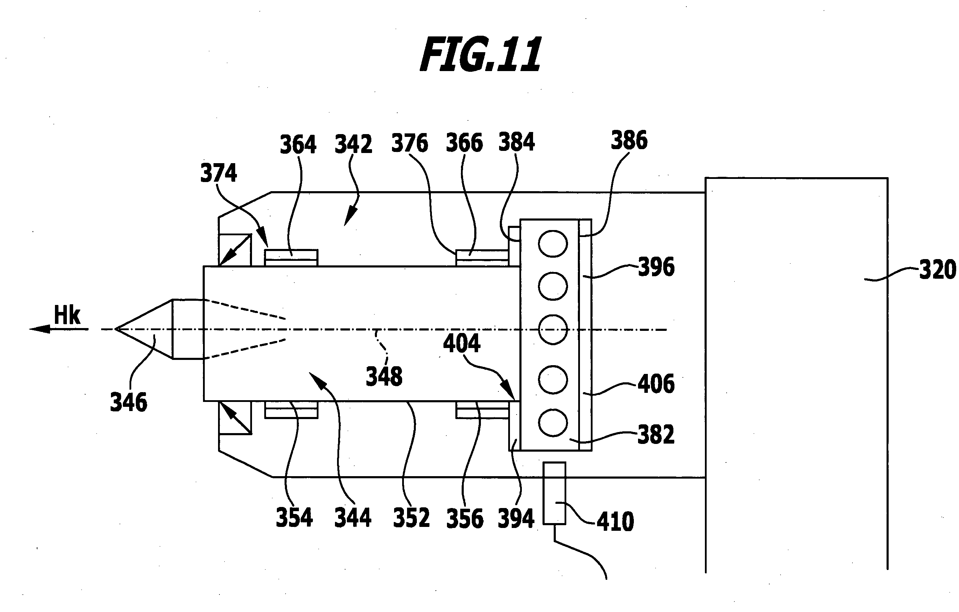

An dem Querschlitten 320 ist ein als Ganzes mit 340 bezeichneter Reitstock angeordnet, welcher, wie in Fig. 11 dargestellt, ein Reitstockgehäuse 342 umfasst, in welchem ein mit 344 bezeichneter Reitstockspitzenträger gelagert ist, der seinerseits eine Reitstockspitze 346 trägt.

Der Reitstockspitzenträger 344 ist dabei in dem Reitstockgehäuse 342 um eine Reitstockspitzenachse 348 drehbar und längs der Reitstockspitzenachse 348 begrenzt verschiebbar gelagert.

Hierzu umfasst der Reitstockspitzenträger 344 einen ersten Lagerabschnitt 352, welcher mit zur Reitstockspitzenachse 348 zylindrischen Radiallagerflächen 354 und 356 versehen ist, die in dem Reitstockgehäuse 342 vorgesehenen Ringtaschen 364 und 366 gegenüberliegen, wobei den Ringtaschen 364 und 366 ein hydraulisches Fluid unter Druck zuführbar ist, so dass die Radiallagerflächen 354 und 356 mit den entsprechend gegenüberliegenden Ringtaschen 364 bzw. 366 hydrostatische Radiallager 374 und 376 bilden, die einerseits eine radial steife Lagerung des Reitstockspitzenträgers 344 im Reitstockgehäuse 342 zulassen, andererseits jedoch aber auch eine Verschiebung des Reitstockspitzenträgers 344 in Richtung der Reitstockspitzenachse 348 zulassen.

Die axiale Abstützung des Reitstockspitzenträgers 344 erfolgt daher durch einen zweiten Lagerabschnitt 382 des Reitstockspitzenträgers 344, welcher quer zur Reitstockspitzenachse 348 verlaufende und einander gegenüberliegende Axiallagerflächen 384 und 386 aufweist, denen gegenüberliegend Druckräume 394 und 396 in dem Reitstockgehäuse 342 angeordnet sind, wobei die Druckräume 394 und 396 und der zweite Lagerabschnitt 382 so angeordnet sind, dass sich der zweite Lagerabschnitt 384 in Richtung der Reitstockspitzenachse 348 relativ zu den Druckräumen 394 und 396 bewegen kann, um durch Beaufschlagung der Druckräume 394 und 396 mit unter Druck stehendem Hydraulikmedium den zweiten Lagerabschnitt 382 in Richtung der Reitstockspitzenachse 348 verschieben zu können, und zwar um Distanzen von beispielsweise weniger als 10 mm, vorzugsweise weniger als 5 mm.

Somit bilden die Axiallagerflächen 382 und 386 mit den entsprechenden Druckräumen 394 und 396 hydrostatische Positioniereinheiten 404 und 406, mit welchen eine Verschiebung des Reitstockspitzenträgers 344 in Richtung der Reitstockspitzenachse 348 erfolgen kann.

Zusätzlich ist in dem Reitstockgehäuse 342 noch ein Sensor 410 vorgesehen, welcher einerseits in der Lage ist, zu detektieren, ob und wie schnell sich der Reitstockspitzenträger 344 relativ zum Reitstockgehäuse 342 um die Reitstockspitzenachse 348 dreht, um welche Winkel sich der Reitstockspitzenträger 344 dreht und ob und in welchem Maße eine Verschiebung des Reitstockspitzenträgers 344 in Richtung der Reitstockspitzenachse 348 relativ zum Reitstockgehäuse 342 erfolgt.

Durch die über den Reitstockspitzenträger 344 im Reitstockgehäuse 342 hydrostatisch radial sowie axial gelagerte Reitstockspitze 346 besteht die Möglichkeit, einerseits die mit dem Werkstück mitrotierende Reitstockspitze 346 möglichst reibungsfrei zu führen und andererseits aber auch in Richtung der Reitstockspitzenachse 348 zu verschieben, um und insbesondere über die hydrostatischen Positioniereinheiten 404 und 406 die Reitstockspitze 346 mit einer Haltekraft Hk gegen das in der Werkstückspindeleinheit 20 aufgenommene Werkstück zu drücken, wobei die Haltekraft Hk, mit welcher die Reitstockspitze 346 auf das Werkstück einwirkt, durch die Drücke in den hydrostatischen Positioniereinheiten 404 und 406 dosiert werden können.

Außerdem ist durch die Anordnung des Reitstocks 340 auf dem Querschlitten 320 und die lagegeregelte Bewegbarkeit des Querschlittens 320 in der Querrichtung 316 mittels der Maschinensteuerung 50 die Möglichkeit gegebenen, den Reitstock 340 in der Arbeitsstellung exakt in einer Bearbeitungsebene BE zu positionieren, so dass die Reitstockspitzenachse 348 in der Bearbeitungsebene BE liegt, in der auch die Werkstückspindelachse 26 verläuft, wobei die Reitstockspitzenachse 348 und die Werkstückspindelachse 26 hierzu koaxial zueinander angeordnet sind.

An dem Querschlitten 320 ist, und zwar in der Querrichtung 316 im Abstand von der Reitstockspitze 340, insbesondere in einem Abstand der größer ist als ein maximaler Radius der Werkstückaufnahme 28, eine Werkzeugaufnahme 420 angeordnet, und zwar an einer einem Werkzeugmagazin 430 zugewandten Seite des Querschlittens 320.

Somit besteht die Möglichkeit, in die Werkzeugaufnahme 420 aus dem Werkzeugmagazin 430 ein Werkzeug 422 einzusetzen und dieses durch lagegeregeltes Bewegen des Querschlittens 320 mittels der Maschinensteuerung 50 in einer geeigneten Position zur Bearbeitung am Werkstück einzusetzen, vorzugsweise das Werkzeug 422 in der Arbeitsstellung in einen Bereich nahe der Bearbeitungsebene BE zu positionieren, um insbesondere mit dem als Innenbearbeitungswerkzeug IW ausgebildeten Werkzeug 422 Innenbearbeitungen am Werkstück vorzunehmen.

Da die Werkzeugaufnahme 420 durch den Querschlitten 320 in der Querrichtung 316 bewegbar ist und die Führungsbasis 310 in der Z-Richtung bewegbar ist, können die beiden Bewegungen in der Querrichtung 316 und in der Z-Richtung dazu ausgenützt werden, um das Werkzeug 422 sowohl in der Querrichtung 316 als auch in der Z-Richtung sowohl zur Bearbeitung des Werkstücks als auch zum Werkzeugwechsel zu bewegen.

Das Werkzeugmagazin 430 weist ein Mehrfachspeicherelement 432 für die Werkzeuge 422 auf, das seinerseits so relativ zu einer Übergabeposition 434, in welche die Werkzeugaufnahme 420 bewegbar ist, bewegbar ist, dass unterschiedliche Werkzeughalterungen 436 des Mehrfachspeicherelements 432 in die Übergabeposition 434 bringbar sind, um in der Übergabeposition 434 entweder ein Werkstück 422 in die jeweilige Speicheraufnahme 436 des Mehrfachspeicherelements 432 einzusetzen oder ein derartiges Werkzeug aus der Werkzeughalterung 436 des Mehrfachspeicherelements 432 zu entnehmen.

Mit der erfindungsgemäßen Werkzeugmaschine lässt sich nun ein Werkstück T bearbeiten, wie wenn die Werkzeugmaschine auch eine reale Y-Achse aufweisen würde.

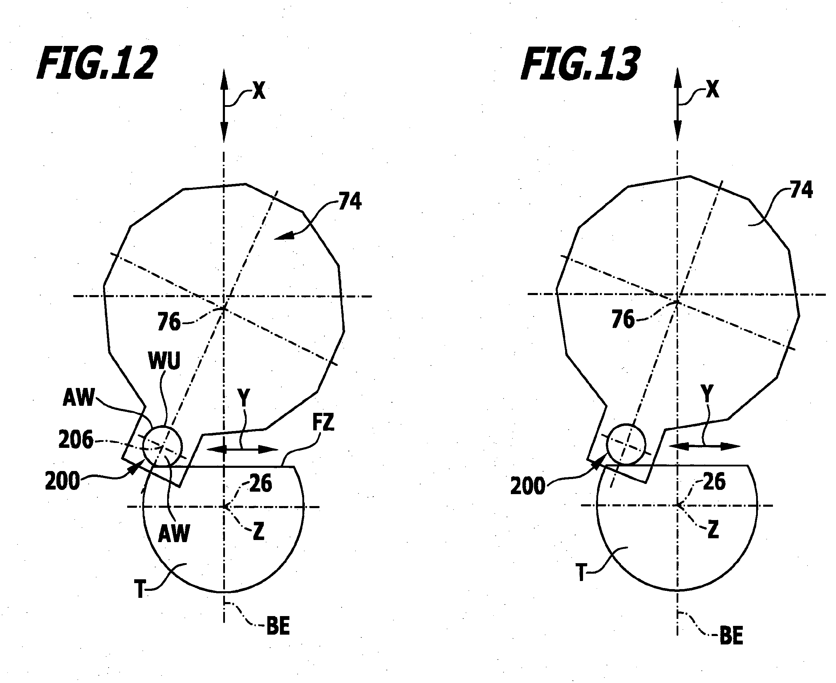

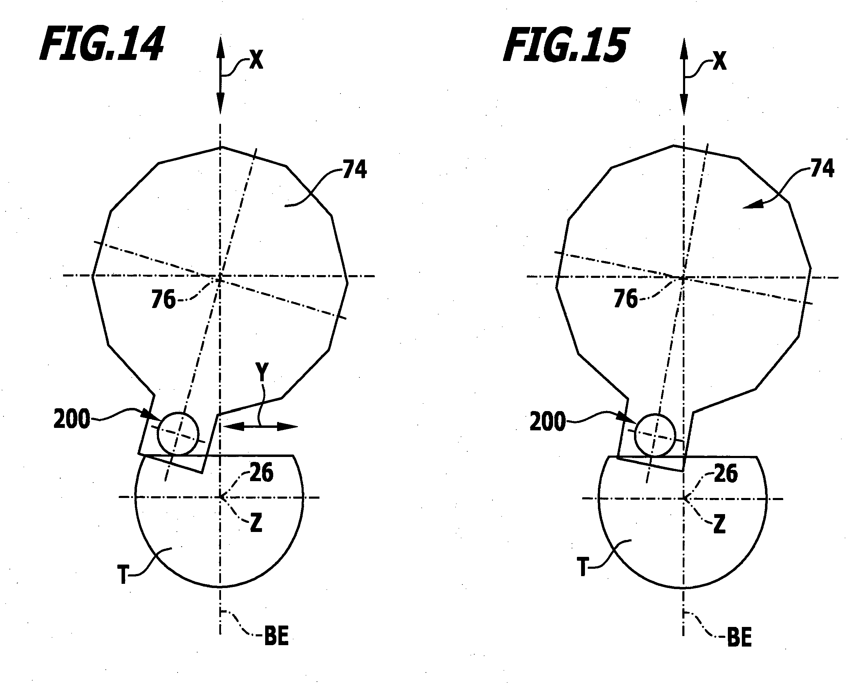

Dies ist bei in einer ersten Variante eines auf der erfindungsgemäßen Werkzeugmaschine durchführbaren Verfahrens in den Fig. 12 bis 15 dargestellt.

Der Werkzeugrevolver 70 wird hierzu um die B-Achse B so gedreht, dass sich die Revolverkopfachse 76 und die Werkstückspindelachse 26 parallel zur Z-Achse erstrecken, somit besteht die Möglichkeit, das Werkstück T im Bereich einer sich parallel zur Z-Richtung erstreckenden Fläche FZ mittels des rotierend angetriebenen Werkzeugs RW, insbesondere mittels eines Werkzeugumfangs WU desselben zu bearbeiten.

Um diese Bearbeitung mit einer Bewegung des Werkzeugs RW in Y-Richtung zu erreichen, wird der Revolverkopf 74 um die Revolverkopfachse 76 so geschwenkt, dass das angetriebene Werkzeug RW mit seinem Werkzeugumfang WU in Y-Richtung gesehen auf einer Seite der Bearbeitungsebene BE an der zu bearbeitenden Fläche FZ die Bearbeitung beginnt. Hierbei ist der Revolverkopf 74 mit der Revolverkopfachse 76 in der Bearbeitungsebene BE angeordnet, so dass zur Bearbeitung auf einer Seite der Fläche FZ der Revolverkopf 74 soweit um die Revolverkopfachse 76 zu drehen und insgesamt in X-Richtung auf das Werkstück T zuzubewegen ist, bis das angetriebene Werkzeug RW mit seinem Werkzeugumfang WU auf einer Seite der Fläche FZ die Bearbeitung beginnen kann.

Bei zunehmender Bewegung des rotierend angetriebenen Werkzeugs RW in Richtung der anderen Seite der Fläche FZ ist es erforderlich einerseits den Revolverkopf 74 um die Revolverkopfachse 76 lagegeregelt zu schwenken und andererseits gleichzeitig den Revolverkopf 74 in X-Richtung weg von der zu erzeugenden Fläche FZ lagegeregelt zu bewegen, wie in den Fig. 13 bis 15 dargestellt, wobei von der Maschinensteuerung 50 eine Interpolation zwischen der Lageregelung der Drehstellung des Revolverkopfes 74 um die Revolverkopfachse 76 und der Lageregelung der Lage der Revolverkopfachse 76 in der Bearbeitungsebene BE in X-Richtung durchzuführen ist.

Je nachdem, wie die X-Bewegung in Richtung der X-Achse und die Drehbewegung um dir Revolverkopfachse 76 miteinander korreliert werden, lässt sich entweder eine ebene Fläche FZ, die parallel zur Z-Richtung und somit auch parallel zur Werkstückspindelachse 26 verläuft oder auch eine beliebig gewölbte, parallel zur Z-Achse oder zur Werkstückspindelachse 26 verlaufende Fläche FZ erzeugen.

Somit bewegt sich tatsächlich das rotierend angetriebene Werkzeug RW in einer quer zur X-Richtung und quer zur Z-Richtung verlaufenden Y-Richtung, um die Fläche FZ zu bearbeiten, ohne das eine seitens der Maschinensteuerung 50 ansteuerbare Y-Achse tatsächlich vorhanden ist.

Bei der ersten mit der erfindungsgemäßen Werkzeugmaschine durchführbaren Verfahrensvariante, dargestellt in Fig. 12 bis 15, besteht außerdem noch die Möglichkeit einer gesteuerten Bewegung des rotierend angetriebenen Werkzeugs AW in der Z-Richtung durch Bewegen des Revolverkopfes 74 in der Z-Richtung dazu einzusetzen, um die Erstreckung des angetriebenen Werkzeugs RW in der Z-Richtung und somit die Erstreckung der Fläche FZ in Z-Richtung festzulegen, wobei vorzugsweise das rotierend angetriebene Werkzeug nicht nur umfangsseitige sondern auch stirnseitige Schneiden aufweist.

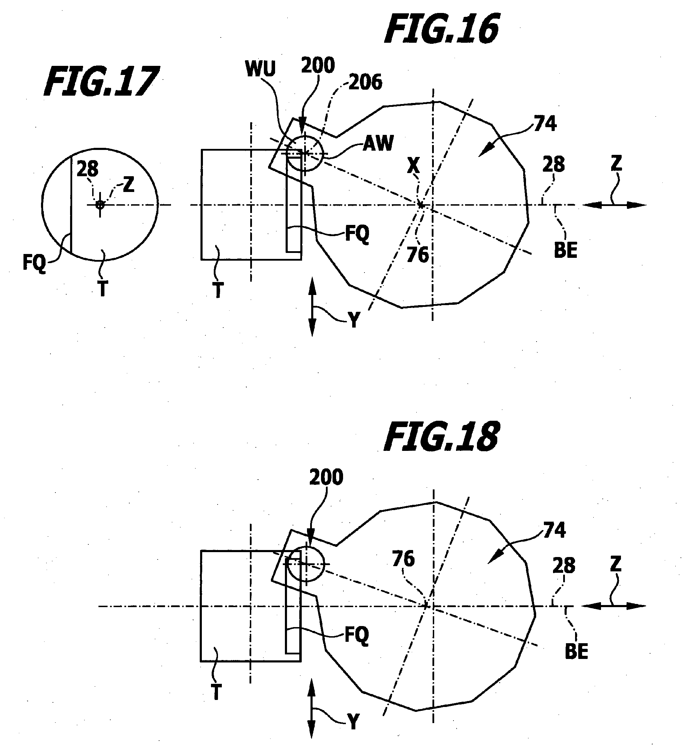

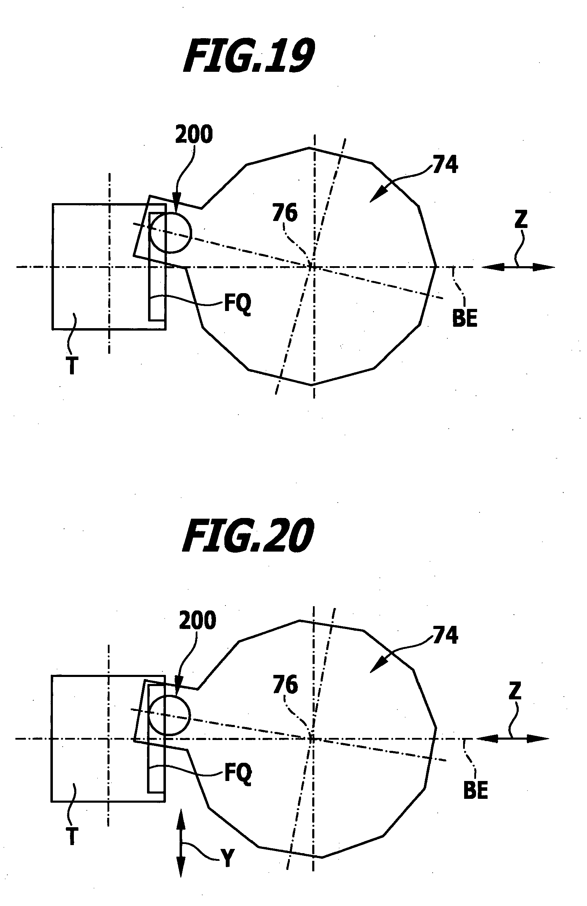

Bei einer zweiten Variante eines auf einer erfindungsgemäßen Werkzeugmaschine durchführbaren Verfahrens sind, wie in Fig. 16 bis 20 dargestellt, die Revolverkopfachse 76 und die Werkzeugspindelachse 206 so durch Drehen des Werkzeugrevolvers um die B-Achse B gedreht, dass diese parallel zur X-Richtung verlaufen, wobei die Revolverkopfachse 76 in der Bearbeitungsebene BE steht und in der Bearbeitungsebene BE in Z-Richtung interpolierend bewegbar ist.

In diesem Fall besteht die Möglichkeit, mit dem rotierend angetriebenen Werkzeug RW eine Fläche FQ zu bearbeiten, die quer zur Z-Achse und somit auch quer zur Werkstückspindelachse 28 verläuft, wobei die Fläche FQ dadurch bearbeitet wird, dass die Bearbeitung beispielsweise in Y-Richtung gesehen auf einer Seite der Fläche FQ mittels des angetriebenen Werkzeugs RW beginnt, wobei der Werkzeugumfang WU beginnt, an dem Werkstück T spanend Material abzutragen. Hierzu wird der Revolverkopf 74 um die Revolverkopfachse 76 so verdreht, dass das angetriebene Werkzeug WU den notwendigen maximalen Abstand von der Bearbeitungsebene BE aufweist und außerdem wird der Revolverkopf 74 mit der in der Bearbeitungsebene BE liegenden Revolverkopfachse 76 soweit in Richtung des Werkstücks T bewegt, bis der Werkzeugumfang WU an der zu erzeugenden Fläche FQ spanabhebend bearbeiten kann.

Danach wird, wie in den Fig. 18 bis 20 dargestellt, der Revolverkopf 74 um die Revolverkopfachse 76 sukzessive lagegeregelt so gedreht, dass sich das angetriebene Werkzeug AW in Richtung der Bearbeitungsebene BE bewegt und gleichzeitig wird der Revolverkopf 74 mit der Revolverkopfachse 76 in der Werkzeugebene BE lagegeregelt in Z-Richtung bewegt, so lange bis das angetriebene Werkzeug AW mit der Werkzeugspindelachse 206 in der Bearbeitungsebene BE liegt. In diesem Fall hat die Revolverkopfachse 76 den maximalen Abstand von der Fläche FQ. Bei weiterer Bewegung des angetriebenen Werkzeugs AW wiederum von der Bearbeitungsebene BE weg ist mit zunehmender Drehung um die Revolverkopfachse 76 wiederum der Revolverkopf 74 in Richtung der zu bearbeitenden Fläche FQ zu bewegen.

Damit ist, obwohl die Revolverkopfachse 76 stets nur in der Bearbeitungsebene BE liegt, die Möglichkeit gegeben, mit dem angetriebenen Werkzeug AW unter Interpolation zwischen der lagegeregelten Drehung des Revolverkopfes 74 um die Revolverkopfachse 76 und der lagegeregelten Bewegung der Revolverkopfachse 76 in der Z-Richtung eine Bearbeitung in einer Y-Richtung, die quer zur Z-Richtung und quer zur X-Richtung und somit quer zur Bearbeitungsebene BE verläuft, möglich.

Dabei ist zusätzlich noch die X-Achse so einsetzbar, dass mit dieser die Lage des angetriebenen Werkzeugs AW in der X-Richtung festlegbar ist, das heißt, es ist festlegbar, in wieweit sich die Fläche FQ von einem Außenumfang des Werkstücks T in dieses hineinerstreckt, wie beispielsweise in Fig. 17 schematisch dargestellt.

Bei einer dritten Variante des auf einer erfindungsgemäßen Werkzeugmaschine durchgeführten Verfahrens wird eine Interpolation der lagegeregelten Bewegung in X-Richtung, der lageregelten Bewegung in Z-Richtung und der lagegeregelten Drehung des Revolverkopfes 74 um die Revolverkopfachse 76 durchgeführt, so dass dieses Verfahren eine Kombination der vorstehend beschriebenen ersten und zweiten Variante darstellt.

## Patentansprüche

1. Werkzeugmaschine umfassend,
ein Maschinengestell (10),
eine an dem Maschinengestell (10) angeordnete Werkstückspindeleinheit (20) mit einer Werkstückspindel (24) und mit einer Werkstückaufnahme (28), welche durch einen Werkstückspindelantrieb (25) um eine Werkstückspindelachse (26) rotierend antreibbar und um die Werkstückspindelachse (26) als C-Achse gesteuert drehbar ist,
eine am Maschinengestell (10) angeordnete Werkzeugträgereinheit (30) mit einem Werkzeugrevolver (70), der einen relativ zum Revolvergehäuse (72) um eine Revolverkopfachse (76) drehbaren Revolverkopf (74) umfasst, und mit einer das Revolvergehäuse (72) tragenden und am Maschinengestell (10) abstützenden Werkzeugträgerbasis (32) mindestens ein Bewegungssystem (40, 80, 120), mittels welchem die Werkstückaufnahme (28) und ein in einer Arbeitsstellung stehendes Werkzeug (W) relativ zueinander gesteuert bewegbar sind, wobei das Revolvergehäuse (72) und die Werkstückaufnahme (28) relativ zueinander in Richtung einer zur Werkstückspindelachse (26) parallelen Z-Achse (Z) und einer quer zur Z-Achse verlaufenden X-Achse (X) bewegbar sind, und wobei das Revolvergehäuse (72) mittels eines B-Bewegungssystems (80) an der Werkzeugträgerbasis (32) gehalten ist und mittels diesem relativ zu der Werkzeugträgerbasis (32) um eine quer zur Z-Achse (Z) und quer zur X-Achse (X) verlaufende B-Achse (B) drehbar ist,
und eine Maschinensteuerung (50) zur Steuerung der Bewegungen des in der Arbeitsstellung stehenden Werkzeugs (W) relativ zu einem in der Werkstückaufnahme (28) aufgenommenen Werkstück,
**dadurch gekennzeichnet, dass** die Maschinensteuerung (50) durch Interpolation zwischen einer lagegeregelten Bewegung des in der Arbeitsstellung stehenden Werkzeugs (W) in der X-Richtung (X) und/oder der Z-Richtung (Z), verbunden mit einem lagegeregelten Drehen des Revolverkopfes (74) um die Revolverkopfachse (76) eine Bewegung des Werkzeugs (W) in der Y-Richtung erzeugt und **dass** bei der Erzeugung der Bewegung in der Y-Richtung die Revolverkopfachse (76) parallel zu einer Werkzeugachse (X, Z) des in der Arbeitsstellung stehenden Werkzeugs (W) ausgerichtet ist.

2. Werkzeugmaschine nach Anspruch 1, **dadurch gekennzeichnet, dass** das in der Arbeitsstellung stehende Werkzeug (W) ein rotierend angetriebenes Werkzeug (AW) ist.

3. Werkzeugmaschine nach einem der voranstehenden Ansprüche, dadurch **gekennzeichnet, dass** die Interpolation der Bewegung in der X-Richtung (X) und die Drehung um die Revolverkopfachse (76) eine Bewegung des in der Arbeitsstellung stehenden Werkzeugs in einer zur Z-Richtung parallelen Fläche (FZ) erzeugt.

4. Werkzeugmaschine nach einem der voranstehenden Ansprüche, dadurch **gekennzeichnet, dass** die Interpolation der Bewegung in der Z-Richtung (Z) und der Drehung um die Revolverkopfachse (76) eine Bewegung des in der Arbeitsstellung stehenden Werkzeugs in einer quer zur Z-Richtung verlaufenden Fläche (FQ) erzeugt.

5. Werkzeugmaschine nach einem der voranstehenden Ansprüche, dadurch **gekennzeichnet, dass** die C-Achse, um welche die Werkstückaufnahme (28) drehbar ist, als nicht interpolationsfähige gesteuerte Achse ausgebildet ist.

6. Werkzeugmaschine nach einem der voranstehenden Ansprüche, dadurch **gekennzeichnet, dass** die B-Achse (B) des B-Bewegungssystems (80) als nicht interpolationsfähige gesteuerte Achse ausgebildet ist.

7. Werkzeugmaschine nach einem der voranstehenden Ansprüche, dadurch **gekennzeichnet, dass** am Revolverkopf (74) mindestens eine Werkzeugspindeleinheit (200) zur Aufnahme des angetriebenen Werkzeugs (AW) angeordnet ist.

8. Werkzeugmaschine nach einem der voranstehenden Ansprüche, dadurch **gekennzeichnet, dass** eine Werkzeugspindelachse (206) der Werkzeugspindel (204) parallel zur Revolverkopfachse (76) ausgerichtet ist.

9. Werkzeugmaschine nach einem der voranstehenden Ansprüche, dadurch **gekennzeichnet, dass** der Revolverkopf (74) durch eine am Revolvergehäuse (72) angeordnete Revolverkopfbewegungseinheit (160) um die Revolverkopfachse (76) drehbar ist.

10. Werkzeugmaschine nach Anspruch 9, **dadurch gekennzeichnet, dass** die Revolverkopfbewegungseinheit (160) als Revolverkopfdrehantrieb (164) einen Hochmomentdirektantriebs-Motor (182) umfasst, mit dessen Rotor (186) der Revolverkopf (74) verbunden ist und dessen Stator (184) fest in dem Revolvergehäuse (72) angeordnet ist und **dass** insbesondere der Revolverkopfdrehantrieb (164) durch die Maschinensteuerung (50) lagegeregelt ansteuerbar ist.

11. Verfahren zum Betreiben einer Werkzeugmaschine umfassend,
ein Maschinengestell (10),
eine an dem Maschinengestell (10) angeordnete Werkstückspindeleinheit (20) mit einer Werkstückspindel (24) und mit einer Werkstückaufnahme (28), welche durch einen Werkstückspindelantrieb (25) um eine Werkstückspindelachse (26) rotierend antreibbar und um die Werkstückspindelachse (26) als C-Achse gesteuert drehbar ist,
eine am Maschinengestell (10) angeordnete Werkzeugträgereinheit (30) mit einem Werkzeugrevolver (70), der einen relativ zum Revolvergehäuse (72) um eine Revolverkopfachse (76) drehbaren Revolverkopf (74) umfasst, und mit einer das Revolvergehäuse (72) tragenden und am Maschinengestell (10) abstützenden Werkzeugträgerbasis (32) mindestens ein Bewegungssystem (40, 80, 120), mittels welchem die Werkstückaufnahme (28) und ein in einer Arbeitsstellung stehendes Werkzeug (W) relativ zueinander gesteuert bewegbar sind,
und eine Maschinensteuerung (50) zur Steuerung der Bewegungen des in der Arbeitsstellung stehenden Werkzeugs (W) relativ zu einem in der Werkstückaufnahme (28) aufgenommenen Werkstück, wobei das Revolvergehäuse (72) und die Werkstückaufnahme (28) relativ zueinander in Richtung einer zur Werkstückspindelachse (26) parallelen Z-Achse (Z) und einer quer zur Z-Achse verlaufenden X-Achse (X) bewegbar sind, und wobei das Revolvergehäuse (72) mittels eines B-Bewegungssystems (80) relativ zu der Werkzeugträgerbasis (32) um eine quer zur Z-Achse (Z) und quer zur X-Achse (X) verlaufende B-Achse (B) drehbar ist,
**dadurch gekennzeichnet, dass** mit der Maschinensteuerung (50) durch Interpolation zwischen einer gesteuerten Bewegung des in der Arbeitsstellung stehenden Werkzeugs (W) in der X-Richtung (X) und/oder der Z-Richtung (Z) verbunden mit einem gesteuerten Drehen des Revolverkopfes (74) um die Revolverkopfachse (76) eine Bewegung des Werkzeugs (W) in der Y-Richtung erzeugt wird und **dass** bei der Erzeugung der Bewegung in der Y-Richtung die Revolverkopfachse (76) parallel zu einer Werkzeugachse (X, Z) des in der Arbeitsstellung stehenden Werkzeugs (W) ausgerichtet wird.

12. Verfahren nach Anspruch 11, **dadurch gekennzeichnet, dass** das in der Arbeitsstellung stehende Werkzeug (W) rotierend angetrieben Werkzeug (AW) wird.

13. Verfahren nach einem der Ansprüche 11 oder 12, **dadurch gekennzeichnet**, **dass** die Interpolation der Bewegung in der X-Richtung (X) und die Drehung um die Revolverkopfachse (76) eine Bewegung des in der Arbeitsstellung stehenden Werkzeugs in einer zur Z-Richtung parallelen Fläche (FZ) erzeugt wird.

14. Verfahren nach einem der Ansprüche 11 bis 13, **dadurch gekennzeichnet**, **dass** die Interpolation der Bewegung in der Z-Richtung (Z) und der Drehung um die Revolverkopfachse (76) eine Bewegung des in der Arbeitsstellung stehenden Werkzeugs in einer quer zur Z-Richtung verlaufenden Fläche (FQ) erzeugt wird.

## Claims

1. Machine tool comprising
a machine frame (10),
a workpiece spindle unit (20) arranged on the machine frame (10) and having a workpiece spindle (24) and a workpiece receptacle (28) rotatingly drivable about a workpiece spindle axis (26) by a workpiece spindle drive (25), said workpiece receptacle being rotatable about the workpiece spindle axis (26) as a C axis in a controlled manner,
a tool carrier unit (30) arranged on the machine frame (10) and having a tool turret (70) comprising a turret head (74) rotatable about a turret head axis (76) relative to the turret housing (72) and a tool carrier base (32) bearing the turret housing (72) and being supported on the machine frame (10),
at least one movement system (40, 80, 120) for movement of the workpiece receptacle (28) and a tool (W) located in an operative position relative to one another in a controlled manner, wherein the turret housing (72) and the workpiece receptacle (28) are movable relative to one another in the direction of a Z axis (Z) parallel to the workpiece spindle axis (26) and an X axis (X) extending transversely to the Z axis and wherein the turret housing (72) is held on the tool carrier base (32) by a B movement system (80) and is rotatable relative to the tool carrier base (32) about a B axis (B) extending transversely to the Z axis (Z) and transversely to the X axis (X) by said B movement system,
and a machine control (50) for controlling the movements of the tool (W) located in the operative position relative to a workpiece accommodated in the workpiece receptacle (28),
**characterized in that** the machine control (50) generates a movement of the tool (W) in the Y direction by way of interpolation between a position-controlled movement of the tool (W) located in the operative position in the X direction (X) and/or the Z direction (Z), accompanied by a position-controlled rotation of the turret head (74) about the turret head axis (76), and **that** during the generation of the movement in the Y direction the turret head axis (76) is aligned parallel to a tool axis (X, Z) of the tool (W) located in the operative position.

2. Machine tool as defined in claim 1, **characterized in that** the tool (W) located in the operative position is a rotatingly driven tool (AW).

3. Machine tool as defined in either one of the preceding claims, **characterized in that** the interpolation of the movement in the X direction (X) and the rotation about the turret head axis (76) generates a movement of the tool located in the operative position in a surface (FZ) parallel to the Z direction.

4. Machine tool as defined in any one of the preceding claims, **characterized in that** the interpolation of the movement in the Z direction (Z) and the rotation about the turret head axis (76) generates a movement of the tool located in the operative position in a surface (FQ) extending transversely to the Z direction.

5. Machine tool as defined in any one of the preceding claims, **characterized in that** the C axis, the workpiece receptacle (28) being rotatable about said C axis, is designed as a controlled axis not capable of interpolation.

6. Machine tool as defined in any one of the preceding claims, **characterized in that** the B axis (B) of the B movement system (80) is designed as a controlled axis not capable of interpolation.

7. Machine tool as defined in any one of the preceding claims, **characterized in that** at least one tool spindle unit (200) is arranged on the turret head (74) for the purpose of accommodating the driven tool (AW).

8. Machine tool as defined in any one of the preceding claims, **characterized in that** a tool spindle axis (206) of the tool spindle (204) is aligned parallel to the turret head axis (76).

9. Machine tool as defined in any one of the preceding claims, **characterized in that** the turret head (74) is rotatable about the turret head axis (76) by way of a turret head movement unit (160) arranged on the turret housing (72).

10. Machine tool as defined in claim 9, **characterized in that** the turret head movement unit (160) comprises a high-torque direct drive motor (182) as turret head rotary drive (164), the turret head (74) being connected to the rotor (186) of said motor and the stator (184) of said motor being arranged securely in the turret housing (72) and **that** the turret head rotary drive (164), in particular, is controllable by the machine control (50) in a position-controlled manner.

11. Method of operating a machine tool comprising,
a machine frame (10),
a workpiece spindle unit (20) arranged on the machine frame (10) and having a workpiece spindle (24) and a workpiece receptacle (28) rotatingly drivable about a workpiece spindle axis (26) by a workpiece spindle drive (25), said workpiece receptacle being rotatable about the workpiece spindle axis (26) as a C axis in a controlled manner,
a tool carrier unit (30) arranged on the machine frame (10) and having a tool turret (70) comprising a turret head (74) rotatable about a turret head axis (76) relative to the turret housing (72) and a tool carrier base (32) bearing the turret housing (72) and being supported on the machine frame (10),
at least one movement system (40, 80, 120) for movement of the workpiece receptacle (28) and a tool (W) located in an operative position relative to one another in a controlled manner,
and a machine control (50) for controlling the movements of the tool (W) located in the operative position relative to a workpiece accommodated in the workpiece receptacle (28), wherein the turret housing (72) and the workpiece receptacle (28) are movable relative to one another in the direction of a Z axis (Z) parallel to the workpiece spindle axis (26) and an X axis (X) extending transversely to the Z axis and wherein the turret housing (72) is rotatable relative to the tool carrier base (32) about a B axis (B) extending transversely to the Z axis (Z) and transversely to the X axis (X) by a B movement system (80),
**characterized in that** a movement of the tool (W) in the Y direction is generated by the machine control (50) by way of interpolation between a controlled movement of the tool (W) located in the operative position in the X direction (X) and/or the Z direction (Z) accompanied by a controlled rotation of the turret head (74) about the turret head axis (76), and **that** during the generation of the movement in the Y direction the turret head axis (76) is aligned parallel to a tool axis (X, Z) of the tool (W) located in the operative position.

12. Method as defined in claim 11, **characterized in that** the tool (W) located in the operative position is a rotatingly driven tool (AW).

13. Method as defined in either one of claims 11 or 12, **characterized in that** the interpolation of the movement in the X direction (X) and the rotation about the turret head axis (76) generates a movement of the tool located in the operative position in a surface (FZ) parallel to the Z direction.

14. Method as defined in any one of claims 11 to 13, **characterized in that** the interpolation of the movement in the Z direction (Z) and the rotation about the turret head axis (76) generates a movement of the tool located in the operative position in a surface (FQ) extending transversely to the Z direction.

## Revendications

1. Machine-outil, comprenant :
un bâti de machine (10),
une unité de broche porte-pièce (20) montée sur le bâti de machine (10) avec une broche porte-pièce (24) et avec une fixation de pièce (28), laquelle est entraînable en rotation autour d'un axe de broche porte-pièce (26) par un entraînement de broche porte-pièce (25) et est commandée de manière à pouvoir tourner autour de l'axe de broche porte-pièce (26) en tant qu'axe C,
une unité porte-outil (30) montée sur le bâti de machine (10) avec une tourelle revolver (70) comprenant une tête revolver (74) pouvant tourner autour d'un axe de tête revolver (76) par rapport au boîtier de revolver (72), et avec une base de porte-outil (32) supportant le boîtier de revolver (72) et s'appuyant contre le bâti de machine (10), au moins un système de déplacement (40, 80, 120), au moyen duquel la fixation de pièce (28) et un outil (W) dans une position de travail peuvent être déplacés de manière commandée l'une par rapport à l'autre, le boîtier de revolver (72) et la fixation de pièce (28) étant déplaçables l'un par rapport à l'autre dans la direction d'un axe Z (Z) parallèle à l'axe de broche porte-pièce (26) et d'un axe X (X) s'étendant transversalement à l'axe Z, et le boîtier de revolver (72) étant maintenu contre la base de porte-outil (32) au moyen d'un système de déplacement B (80) et pouvant au moyen de celui-ci tourner par rapport à la base de porte-outil (32) autour d'un axe B (B) s'étendant transversalement à l'axe Z (Z) et transversalement à l'axe X (X),
et une commande de machine (50) pour la commande des mouvements de l'outil (W) en position de travail par rapport à une pièce logée dans la fixation de pièce (28),
**caractérisée en ce que** la commande de machine (50) génère un déplacement de l'outil (W) en direction Y par interpolation entre un déplacement à régulation de position de l'outil (W) en position de travail dans la direction X (X) et/ou la direction Z (Z), associée à une rotation à régulation de position de la tête revolver (74) autour de l'axe de tête revolver (76), et **en ce que** pendant la génération du déplacement en direction Y, l'axe de tête revolver (76) est aligné parallèlement à un axe d'outil (X, Z) de l'outil (W) en position de travail.

2. Machine-outil selon la revendication 1, **caractérisée en ce que** l'outil (W) en position de travail est un outil (AW) entraîné en rotation.

3. Machine-outil selon l'une des revendications précédentes, **caractérisée en ce que** l'interpolation du déplacement en direction X (X) et de la rotation autour de l'axe de tête revolver (76) génère un déplacement de l'outil en position de travail sur une surface (FZ) parallèle à la direction Z.

4. Machine-outil selon l'une des revendications précédentes, **caractérisée en ce que** l'interpolation du déplacement en direction Z (Z) et de la rotation autour de l'axe de tête revolver (76) génère un déplacement de l'outil en position de travail sur une surface (FQ) s'étendant transversalement à la direction Z.

5. Machine-outil selon l'une des revendications précédentes, **caractérisée en ce que** l'axe C autour duquel la fixation de pièce (28) est rotative est prévu comme axe commandé inapte à l'interpolation.

6. Machine-outil selon l'une des revendications précédentes, **caractérisée en ce que** l'axe B (B) du système de déplacement B (80) est prévu comme axe commandé inapte à l'interpolation.

7. Machine-outil selon l'une des revendications précédentes, **caractérisée en ce qu'**au moins une unité de broche porte-outil (200) pour la fixation de l'outil (AW) entraîné est montée sur la tête revolver (74).

8. Machine-outil selon l'une des revendications précédentes, **caractérisée en ce qu'**un axe (206) de la de broche porte-outil (204) est aligné parallèlement à l'axe de tête revolver (76).

9. Machine-outil selon l'une des revendications précédentes, **caractérisée en ce que** la tête revolver (74) est rotative autour de l'axe de tête revolver (76) au moyen d'une unité de déplacement de tête revolver (160) montée sur le boîtier de revolver (72).

10. Machine-outil selon la revendication 9, **caractérisée en ce que** l'unité de déplacement de tête revolver (160) comprend un moteur à entraînement direct à couple élevé (182) en tant qu'entraînement rotatif de tête revolver (164), auquel le rotor (186) de la tête revolver (74) est relié et dont le stator (184) est fixement monté dans le boîtier de revolver (72), et **en ce qu'**en particulier l'entraînement rotatif de tête revolver (164) peut être commandé par la commande de machine (50) avec régulation de position.

11. Procédé de fonctionnement d'une machine-outil comprenant :
un bâti de machine (10),
une unité de broche porte-pièce (20) montée sur le bâti de machine (10) avec une broche porte-pièce (24) et avec une fixation de pièce (28), laquelle est entraînable en rotation autour d'un axe de broche porte-pièce (26) par un entraînement de broche porte-pièce (25) et est commandée de manière à pouvoir tourner autour de l'axe de broche porte-pièce (26) en tant qu'axe C,
une unité porte-outil (30) montée sur le bâti de machine (10) avec une tourelle revolver (70) comprenant une tête revolver (74) pouvant tourner autour d'un axe de tête revolver (76) par rapport au boîtier de revolver (72), et avec une base de porte-outil (32) supportant le boîtier de revolver (72) et s'appuyant contre le bâti de machine (10), au moins un système de déplacement (40, 80, 120), au moyen duquel la fixation de pièce (28) et un outil (W) dans une position de travail peuvent être déplacés de manière commandée l'une par rapport à l'autre,
et une commande de machine (50) pour la commande des déplacements de l'outil (W) en position de travail par rapport à une pièce logée dans la fixation de pièce (28), le boîtier de revolver (72) et la fixation de pièce (28) étant déplaçables l'un par rapport à l'autre dans la direction d'un axe Z (Z) parallèle à l'axe de broche porte-pièce (26) et d'un axe X (X) s'étendant transversalement à l'axe Z, et le boîtier de revolver (72) pouvant au moyen d'un système de déplacement B (80) tourner par rapport à la base de porte-outil (32) autour d'un axe B (B) s'étendant transversalement à l'axe Z (Z) et transversalement à l'axe X (X),
**caractérisé en ce qu'**un déplacement de l'outil (W) en direction Y est généré par la commande de machine (50), par interpolation entre un déplacement commandé de l'outil (W) en position de travail dans la direction X (X) et/ou la direction Z (Z), associée à une rotation commandée de la tête revolver (74) autour de l'axe de tête revolver (76), et **en ce que** pendant la génération du déplacement en direction Y, l'axe de tête revolver (76) est aligné parallèlement à un axe d'outil (X, Z) de l'outil (W) en position de travail.

12. Procédé selon la revendication 11, **caractérisé en ce que** l'outil (W) en position de travail est un outil (AW) entraîné en rotation.

13. Procédé selon la revendication 11 ou 12, **caractérisé en ce que** l'interpolation du déplacement en direction X (X) et de la rotation autour de l'axe de tête revolver (76) génère un déplacement de l'outil en position de travail sur une surface (FZ) parallèle à la direction Z.

14. Procédé selon l'une des revendications 11 à 13, **caractérisé en ce que** l'interpolation du déplacement en direction Z (Z) et de la rotation autour de l'axe de tête revolver (76) génère un déplacement de l'outil en position de travail sur une surface (FQ) s'étendant transversalement à la direction Z.
